# EUROPÄISCHE PATENTSCHRIFT

(11) **EP 3 542 992 B1**
(45) Veröffentlichungstag und Bekanntmachung des Hinweises auf die Patenterteilung: **24.03.2021**
(21) Anmeldenummer: 18400031.3
(22) Anmeldetag: 26.11.2018
(51) Int. Cl.: B29C 64/118, B29C 64/336, B33Y 30/00

(54) **VORRICHTUNG UND VERFAHREN FÜR DEN WECHSEL VON FILAMENTEN UNTERSCHIEDLICHER FARBE UND/ODER UNTERSCHIEDLICHEN MATERIALS FÜR DIE FERTIGUNG VON 3D-DRUCKTEILEN SOWIE EXTRUDER MIT EINEM FILAMENTWECHSELSYSTEM**
DEVICE AND METHOD FOR CHANGING FILAMENTS OF DIFFERENT COLOUR AND/OR DIFFERENT MATERIALS FOR THE PRODUCTION OF 3D PRINTED PARTS AND EXTRUDER WITH FILAMENT CHANGING SYSTEM
DISPOSITIF ET PROCÉDÉ DE CHANGEMENT DES FILAMENTS DE COULEURS DIFFÉRENTES ET / OU DE MATÉRIAUX DIFFÉRENTS DESTINÉS À LA FABRICATION DE PIÈCES IMPRIMÉES TRIDIMENSIONNELLES AINSI QU'EXTRUDER AVEC UN SYSTÈME DE CHANGEMENT DE FILAMENT

(30) Priorität: 20.03.2018 DE 102018002287
(43) Veröffentlichungstag der Anmeldung: 25.09.2019
(73) Patentinhaber: Technische Universität Dortmund, 44227 Dortmund (DE)
(72) Erfinder: Künne, Bernd, 59494 Soest (DE); Mosler, Julian, 81543 München (DE); Krautwald, Tim, 59425 Unna (DE); Gruson, Jasper, 44135 Dortmund (DE); Kemper, Philipp, 44225 Dortmund (DE)
(74) Vertreter: Bendele, Tanja

(56) Entgegenhaltungen:
- CN-A- 106 891 521
- CN-U- 204 566 689
- CN-U- 205 836 018
- KR-A- 20170 000 295

## Beschreibung

Die Erfindung betrifft ein Filamentwechselsystem für den Wechsel von Filamenten unterschiedlicher Farbe und/oder unterschiedlichen Materials für die Fertigung von 3D-Druckteilen mittels FLM-Druck und ein entsprechendes Verfahren.

Derartige Filamentwechselsysteme werden bei der generativen Fertigung von Bauteilen aus mehreren Filamenten unterschiedlicher Farbe und unterschiedlichen Materials nach dem sog. FLM-Verfahren (Fused Layer Modeling) eingesetzt. Das FLM-Verfahren ist ein generatives Fertigungsverfahren mit schichtweiser Bauteilherstellung, wobei ein drahtförmiger, auf einer Rolle befindlicher Ausgangsstoff mithilfe eines Extruders plastifiziert und schichtweise auf einen Werkstückträger aufgetragen wird. Werden unterschiedliche Farben oder Materialeigenschaften gewünscht, müssen unterschiedliche Filamente verwendet werden, die dann während des Druckens des Bauteils jeweils zur Herstellung des lokalen Schichtbereichs in Benutzung gebracht werden müssen.

Das Filamentwechselsystem ist in Bewegungsrichtung des Filaments gesehen zwischen den Filamentrollen, auf denen die unterschiedlichen Filamente bevorratet aufgerollt sind, und dem Extruder angeordnet, der das Material durch eine Düse hindurch extrudiert. Das Filamentwechselsystem muss in der Lage sein, ein im Extrusionsprozess befindliches Filament möglichst unterbrechungsfrei und an einer definierten Stelle bzw. zu einem definierten Zeitpunkt gegen ein anderes Filament aus einer idealerweise beliebig großen Auswahl von unterschiedlichen Filamenten auszutauschen.

Derartige Filamentwechselsysteme sind schon verschiedentlich im Stand der Technik beschrieben worden.

Bereits bekannt ist eine Extruderanordnung für einen 3D-Drucker gemäß EP 3 156 217 A1, die eine Mehrzahl von Zuführeinrichtungen zum Zuführen mehrerer Druckmaterialfilamente aufweist. Die Druckmaterialien werden von mehreren Filamentrollen abgezogen und einem Y-förmigen Mischer zugeführt, der dicht vor dem Heizelement, das seinerseits dicht vor der Düse verbaut ist, angeordnet ist. Jedem Filament ist ein eigener Vorschubantrieb zugeordnet. Wenn das Filament gewechselt werden soll, wird mittels des Vorschubantriebs zunächst das vorherige Filament aus der Düse zurückgezogen, bevor das zukünftige Filament nachgeschoben wird. Nachteilig ist, dass das bereits plastifizierte bisherige Material aus der Düse herausgezogen werden muss, bevor das zukünftige Material dem Heizelement bzw. der Düse zugeführt wird. Einerseits entsteht hierdurch eine Unterbrechung des Druckvorgangs, andererseits besteht die Gefahr, dass bereits plastifiziertes Material beim Zurückziehen die Führungselemente und den Mischer verstopft. Außerdem ist der Bauaufwand relativ hoch, da jeder Filamentsorte ein hochwertiger Extruder-Vorschubantrieb zugeordnet ist.

Weiterhin offenbart die DE 10 2016 108 272 A1 eine Vorrichtung zur Herstellung dreidimensionaler Objekte aus strangförmigen Filamenten, bei der die Filamente mittels jeweils einer Dosiervorrichtung einer Mischvorrichtung zugeführt werden, von der aus das gemischte Material weiter zum Extruder transportiert wird. Nachteilig ist hierbei, dass das Material nur aus mehr oder weniger großen Anteilen der zugeführten Filamente bestehen kann. Soll beispielsweise von einem Filament auf ein anderes Filament umgestellt werden, ergibt sich eine Zwischensituation, in der die Materialien der beiden Filamente miteinander vermengt sind und ein definierter Wechsel nicht möglich ist.

Bei der Anordnung nach WO 2015 156 877 A2 werden von mehreren Filamentrollen Filamente abgezogen, abgeschnitten und die so entstandenen Stücke in einer Schweißeinheit aneinandergeschweißt. Nachteilig ist hierbei, dass ein sauberes Verschweißen nur bei gleichartigen Werkstoffen der Filamente möglich ist. Außerdem muss die Schweißstelle der verschweißten Filamente anschließend den Extruder und das plastifizierte Material die Düse durchlaufen, wobei es aufgrund der Geometrie der Schweißstelle und der Inhomogenität des Werkstoffes zu Problemen wie Verklemmen bzw. Verstopfen o. ä. kommen kann.

KR2017000295A offenbart ein Filamentwechselsystem mit einem trichterförmigen Führungsteil. CN205836018U offenbart einen beweglichen Block, der auf einer Führungsschiene an den bevorrateten Filamenten vorbeigeführt wird. CN106891521A offenbart eine um eine Mittelachse bewegliche Einheit. CN204566689U offenbart eine integrale Zuführeinheit.

Es sind nach dem Stand der Technik weitere Wechselsysteme bekannt, wobei zwischen Systemen mit nur einem Extruder und solchen mit mehreren Extrudern unterschieden werden kann. Bei Systemen mit nur einem Extruder werden die einzelnen Filamente miteinander verschweißt, was einerseits nur bei gleichartigen Filamenten möglich ist und andererseits geometrische und stoffliche Inhomogenitäten erzeugt, die zum Verstopfen des Extruders führen können. Aufgrund des für den Schweißvorgang benötigten Zeitraums ist ein unterbrechungsfreier Druck nicht möglich.

Eine weitere Möglichkeit stellt das sogenannte "Stick Filament" dar, bei dem Filamente über eine Steckverbindung miteinander verbunden werden, sodass der Schweißvorgang entfällt. Hierbei können zwar unterschiedliche Materialien zu einem Strang verbunden und verarbeitet werden, jedoch muss die jeweilige Verbindung für jeden Wechsel während des Druckvorgangs angefertigt werden, was extrem aufwändig ist, oder es werden vorgefertigte Filamentstränge verwendet, die eine definierte Länge haben (z.B. 1 m). Für den letzteren Fall ist ein Wechsel zu einem beliebigen Zeitpunkt ausgeschlossen. Außerdem besteht der Steckbereich aus einer Kombination beider Materialien, so dass ein definierter Übergang ausgeschlossen ist.

Es gibt auch Systeme, bei denen die Farbe des verdruckten Materials dadurch verändert wird, dass ein stabförmiges Grundmaterial jeweils unterschiedlich eingefärbt wird. Hierbei können aber keine unterschiedlichen Grundmaterialien verwendet werden. Prozessbedingt weist das Endprodukt ein deutlich schlechteres Farbbild auf, als wenn dieses mittels Vollmaterial hergestellt wird. Außerdem kann es durch den Einfärbungsvorgang zu Verzögerungen im Extrusionsprozess kommen.

Des Weiteren existieren Verfahren, nach denen ein mehrfarbiges Produkt durch das Mischen unterschiedlich farbiger Grundmaterialien hergestellt werden kann. Lediglich die Farbe kann hierbei variieren, nicht aber die Materialart. Klare Farbübergänge sind ohne Materialabfall nicht möglich und führen zu Verzögerungen im Prozessablauf.

Bei Filamentwechselsystemen, die mehrere Extruder verwenden, sind entsprechend viele hochwertige Extruderantriebe erforderlich, was zu hohen Kosten für die Filamentwechselsysteme führt. Außerdem sind die bewegten Massen sehr hoch. Darüber hinaus ist die Steuerung der Verfahrbewegung sensorisch und softwaretechnisch aufwendig, was die Prozesssicherheit negativ beeinflussen kann. Zudem besteht auch hier ein Übergangsbereich beim Wechsel von einem auf einen anderen Extruder, so dass ein unterbrechungsfreier Übergang zwischen den beiden Materialien nicht möglich ist. Einen weiteren Nachteil stellt der eingeschränkte Druckraum dar.

Aufgabe der vorliegenden Erfindung ist es daher, ein Filamentwechselsystem für 3D-Drucker zu schaffen, die nach dem FLM-Verfahren arbeiten, das die Herstellung von Bauteilen ermöglicht, die aus Filamenten aus nahezu beliebig vielen unterschiedlichen Materialarten und Materialien mit unterschiedlichen Farben aufgebaut werden können, wobei der Wechselprozess zwischen den unterschiedlichen Filamenten hinsichtlich des ablaufenden Druckvorgangs unterbrechungsfrei und an einer definierten Stelle bzw. zu einem definierten Zeitpunkt sowie automatisiert erfolgen soll und das Filamentwechselsystem möglichst einfach aufgebaut sein und möglichst wenige Förderantriebe für die einzelnen Filamente aufweisen soll sowie aufeinanderfolgende Filamentabschnitte unterschiedlicher Materialien jeweils optimal temperiert werden.

Die Lösung der erfindungsgemäßen Aufgabe ergibt sich hinsichtlich der Vorrichtung aus den Merkmalen des Anspruches 1 und des Anspruchs 13 und hinsichtlich des Verfahrens aus den Merkmalen des Anspruches 9. Weitere vorteilhafte Ausgestaltungen der Erfindung ergeben sich aus den Unteransprüchen.

Die Erfindung hinsichtlich der Vorrichtung geht aus von einem Filamentwechselsystem zum Wechseln von Filamenten unterschiedlicher Farbe und/oder unterschiedlichen Materials für die Fertigung von 3D-Druckteilen nach dem FLM-Verfahren. Ein derartiges gattungsgemäßes Filamentwechselsystem wird dadurch in erfinderischer Weise weiter gebildet, dass zwischen einer Speichervorrichtung für alle verwendeten Filamentstränge und einem Extruder mindestens eine Auswahleinrichtung zur Auswahl des jeweils zu verwendenden Filaments und mindestens eine Trenneinheit zum Abtrennen des vorher verwendeten Filaments angeordnet ist, und dass jedem der verwendbaren Filamente je eine Schalteinrichtung zugeordnet ist, die das zugehörige Filament wahlweise in Förderposition zur Förderung durch eine Antriebseinheit mit einer definierten Geschwindigkeit bringen oder so freigeben kann, dass das Filament ungehindert, vorzugsweise mittels des Extruders gefördert werden kann, wobei die Auswahleinrichtung eine Zuordnungseinrichtung aufweist, die für das jeweils verwendete Filament einen Abschnitt der Förderstrecke von der Speichervorrichtung zu dem Extruder bildet, und Schalteinrichtung und Antriebseinheit zumindest zeitweise so einstellbar sind, dass das neu verwendete Filament mit einer höheren Fördergeschwindigkeit als der Fördergeschwindigkeit des bisher verwendeten Filaments dem bisher verwendeten Filament hinterher gefördert wird.

Der Grundgedanke der Erfindung liegt dabei darin, in der Auswahleinrichtung gleichzeitig eine Bevorratung der Enden der aus der magazinartigen Speichervorrichtung abgezogenen Filamente so vorzunehmen, dass das jeweils verwendete Filament frei mithilfe des Extruders durch die Auswahleinrichtung hindurch gefördert werden kann, bis ein Filamentwechsel ansteht. Der Extruder zieht im Standardmodus das jeweils verwendete Filament mit seinem eigenen Antrieb ein und die Auswahleinrichtung hat hierbei nur die Aufgabe, einen möglichst störungsfreien Weg für den Filamentvorschub bereitzustellen. Steht hingegen ein Filamentwechsel an, so wird abhängig von der Fördergeschwindigkeit des Extruders frühzeitig genug der Filamentwechselvorgang ausgelöst, indem als erstes das bisher verwendete Filament von der Trenneinheit abgeschnitten wird und nur noch der extruderseitig verbleibende Rest dieses Filaments von dem Extruder weiter gefördert wird. Gleichzeitig zu diesem weiter ablaufenden Fördervorgang durch den Extruder wird nun das neu zum Einsatz kommende Filament durch die Auswahlvorrichtung so relativ zu der Führungsbahn der Filamente zum Extruder positioniert, dass das neu zum Einsatz kommende Filament dem bisher verwendeten Filament nachfolgen kann. Hierzu verwendet die Auswahlvorrichtung eine Zuordnungseinrichtung, die einen Abschnitt der Förderstrecke von der Speichervorrichtung zu dem Extruder bildet und das jeweils benötigte Filament zu der Führungsbahn der Filamente von der Auswahlvorrichtung zum Extruder führt. Durch die Schalteinrichtung kann das neu zum Einsatz kommende Filament anschließend mit einer höheren Fördergeschwindigkeit als der Fördergeschwindigkeit des Extruders nachgefördert werden, damit die aufgrund der benötigten Zeit für den Wechselvorgang entstandene Lücke zwischen bisher verwendetem Filament und neu zum Einsatz kommendem Filament wieder geschlossen werden kann. Die Schalteinrichtung und die Antriebseinheit werden daher zumindest zeitweise so betrieben, dass das neu zum Einsatz kommende Filament schneller als das bisher verwendete Filament in Richtung auf den Extruder gefördert wird, zumindest so lange, bis das neu zum Einsatz kommende Filament das bisher verwendete Filament eingeholt hat und am abgeschnittenen Endbereich des bisher verwendeten Filament anliegt. Vorteilhafterweise sollte die schnellere Fördergeschwindigkeit des neu zum Einsatz kommenden Filaments bei Einholen des Endes des bisher verwendeten Filaments auf die Fördergeschwindigkeit des Extruders oder ein wenig mehr als die Fördergeschwindigkeit des Extruders reduziert werden, damit beide Filamente ohne Druck nahtlos in den Extruder einlaufen können. Denkbar ist es auch, einen gewollten Schlupf der Antriebseinheit zu dem zu fördernden Filament vorzusehen, sodass das neu verwendete Filament nach dem Wechselvorgang und den Einholen des vorher verwendeten Filaments an das vorher verwendete Filament angedrückt wird. Dies wird dadurch erreicht, dass der Förderantrieb geringfügig schneller läuft als der Extruderantrieb und ein Schlupf erfolgt zwischen Antriebseinheit und Filament konstruktiv vorgesehen wird. Anschließend kann der zusätzliche Antrieb des neu zum Einsatz kommenden Filaments dadurch abgeschaltet werden, dass die Schalteinrichtung über das Filament nicht mehr mit der Antriebseinheit wechselwirkt, so dass das Filament die Auswahleinrichtung bis zum nächsten Wechselvorgang frei durchlaufen kann.

Laufen nun diese beiden so geförderten Filamente in den Extruder ein, so ist ein quasi nahtloser Übergang zwischen den beiden Filamentabschnitten während des Druckvorgangs gewährleistet und der Materialwechsel bzw. Farbenwechsel kann nahezu schlagartig realisiert werden. Das erfindungsgemäße Filamentwechselsystem ist daher in der Lage, ein im Extrusionsprozess beim Drucken befindliches Filament unterbrechungsfrei und an einer definierten Stelle bzw. zu einem definierten Zeitpunkt gegen ein anderes Filament aus einer beliebig großen Auswahl von Filamenten unterschiedlicher Materialien oder gleicher Materialien mit unterschiedlicher Farbe zu tauschen. Auch sehr unterschiedliche Materialien können dadurch direkt hintereinander gedruckt werden, da die beiden Filamentanschnitte zwar direkt hintereinander, aber ohne die Notwendigkeit einer Verschweißung oder mechanischen Kopplung in den Extruder eingebracht werden können. Darüber hinaus wird bei einem 3D-Drucker mit dem erfindungsgemäßen Filamentwechselsystem nur ein einziger Extruder erforderlich und das Filamentwechselsystem selbst ist einfach aufgebaut, da nur ein Förderantrieb für die einzelnen Filamente und die Schalteinrichtungen verwendet werden. Durch das beschriebene Vorgehen ist es möglich, das neu zum Einsatz kommende Filament nahtlos hinter dem bisher verwendeten Filament zu fördern und gleichzeitig eine Übergangsstelle zwischen den Filamenten zu ermöglichen, die keine problematische Schweißstelle oder andere z.B. geometrisch undefinierte Verbindungsstelle aufweist und daher hinsichtlich des Materialauftrags bzw. der Gestaltung des Übergangsbereichs zwischen den Filamenten handhabungstechnische Probleme hervorrufen könnte.

Von besonderem Vorteil ist es, wenn die jedem Filament jeweils zugeordnete Schalteinrichtung jeweils eine eigene Antriebseinheit, vorzugsweise eine Antriebsrolle oder dgl., aufweist, mit der jedes Filament mit einer anpassbaren Geschwindigkeit hin zu dem Extruder förderbar ist. Hierdurch kann jedes Filament aus der Anzahl zur Verfügung stehender Filamente separat angesteuert und in seinem Bewegungsverhalten beeinflusst werden. Die Schalteinrichtungen können dabei konstruktiv einfach und jeweils gleichartig aufgebaut werden, so dass der Aufwand und die Kosten für die separate Ansteuerung einer größeren Anzahl von Filamenten begrenzt bleiben.

Zur weiteren Reduktion des baulichen Aufwands für den Antrieb der Filamente ist es aber auch denkbar, dass die jedem Filament jeweils zugeordneten Schalteinrichtungen eine gemeinsame Antriebseinheit, vorzugsweise eine Antriebsrolle oder dgl., für alle förderbaren Filamente aufweisen, mit der jedes Filament mit einer anpassbaren Geschwindigkeit hin zu dem Extruder förderbar ist. Diese Anordnung ist insbesondere in Kombination mit einer linear verschiebbaren Zuordnungseinrichtung sinnvoll, da hierdurch der Aufwand für den Antrieb der Filamente und damit die Kosten für die Antriebseinheit deutlich reduziert werden kann, z.B. bei fünf anzutreibenden Filamenten auf ein Fünftel.

Die Antriebseinheit kann beispielsweise durch einen Schrittmotor angetrieben werden. Hierdurch wird sowohl der mechanische Bauaufwand als auch der Aufwand für den Antrieb und die Steuerung der Drehzahl der Antriebseinheit gering gehalten.

In einer weiteren Ausgestaltung der Schalteinrichtung ist es denkbar, dass jede Schalteinrichtung jeweils eine linear verschiebliche (oder um eine Achse verschwenkbare) Stelleinheit aufweist, die so verstellbar ist, dass das jeweilige Filament entweder gegen die Antriebsrolle angedrückt oder freigegeben ist. Etwa, wenn jede Stelleinheit einen, vorzugsweise linear zwischen festlegbaren Positionen verschiebbaren, Rahmen mit einer Andruckrolle und einer Klemmbacke aufweist, lässt sich die Einstellung der verschiedenen Schaltstellungen der Stelleinheit mechanisch und ansteuerungstechnisch besonders einfach realisieren, etwa indem der verschiebbare Rahmen mittels eines Solenoids oder über einen Schrittmotor und ein Zahnrad-Zahnstangen-Getriebe verschiebar ist. Der verschiebbare Rahmen der Stelleinheit kann dabei mittels der ebenfalls verschiebbaren oder verschwenkbaren Andruckrolle in einer Förderstellung der Schalteinrichtung das jeweils zu fördernde Filament gegen die angetriebene Antriebsrolle drücken, sodass das jeweilige Filament reibschlüssig zum Extruder gefördert wird. Dies ist die Stellung der Schalteinrichtung, die im Rahmen des Filamentwechsels zwischen dem Abschneiden des vorher verwendeten Filaments und dem Einlaufen des neu zu verwendenden Filaments in den Extruder benötigt wird.

Ist hingegen nach der Durchführung des Filamentwechsels das neu zu verwendende Filament in den Extruder eingelaufen, so wird ein eigenständiger Antrieb des Filaments nicht mehr benötigt, da der Extruder das Filament weiter einzieht. Dann kann die Stelleinheit, vorzugsweise die Andruckrolle, für das jeweils zu fördernde Filament in einer Durchlaufstellung der Schalteinrichtung so positioniert werden, dass das jeweils zu fördernde Filament bei Einwirkung einer äußeren Kraft, insbesondere einer durch den nachgeschalteten Extruder erzeugten Zugkraft, ungehindert und weitgehend oder sogar komplett reibungsfrei durch die Schalteinrichtung hindurch laufen kann. Die Schalteinrichtung weist deshalb eine weitere Stellung auf, in der das Filament freigegeben und somit frei beweglich ist, also weder festgeklemmt noch angetrieben wird. Das Freigeben des Filaments ist notwendig, wenn das Filament den nachgeschalteten Extruder erreicht hat und von nun an durch dessen Antrieb gefördert wird.

Besonders für das definierte Bevorraten der Enden der zur Verfügung stehenden Filamente ist es von Vorteil, wenn jede Schalteinrichtung in eine weitere Position verstellbar ist, in der die Schalteinrichtung das jeweilige Filament, vorzugsweise mit der Klemmbacke gegen eine feste Gegenbacke, klemmt. Hierdurch werden die gerade nicht verarbeiteten Filamente geklemmt, um eine unerwünschte Verschiebung in Förderrichtung zu vermeiden.

Von weiterem Vorteil ist es, wenn die Auswahleinheit ein linear bewegliches angetriebenes Magazin aufweist, das eine Anzahl von Führungselementen entsprechend der maximalen Anzahl der zu verarbeitenden Filamente aufweist. Hierdurch werden alle bevorrateten Filamente in der Auswahleinheit selbst mit ihren Enden für eine Verarbeitung bereit gehalten und können mit geringsten Wechselzeiten direkt auf den Weg zum Extruder gebracht werden.

In der erfindungsgemäßen Ausgestaltung weist die Zuordnungseinrichtung zur Auswahl des zu verwendenden Filaments eine linear verschiebliche Einheit auf, in der Endabschnitte der Filamente, vorzugsweise nebeneinander magaziniert, aufgenommen werden können, und die verschiebliche Einheit mittels linearer Verstellbewegung das jeweils zu verwendende Filament gegenüberliegend zu einer einzigen Führungsbahn in Richtung auf den Extruder positionieren kann. Die Auswahleinheit weist dabei ein lineares, angetriebenes Magazin auf, das eine Anzahl von Führungselementen besitzt, die der maximalen Anzahl der zu verarbeitenden Filamente entspricht. Dem steht ein einziges Führungselement gegenüber, das die Führung des ausgewählten Filaments zum Extruder übernimmt. Das Filament, dessen Führungselement des Magazins dem Führungselement zum Extruder gegenübersteht, kann verarbeitet werden. Die lineare Verschiebung der Zuordnungseinrichtung erlaubt nur geringe Verschiebewege und damit kurze Filamentwechselzeiten bei einfacher konstruktiver Umsetzung dieser Linearverschiebung der Zuordnungseinrichtung.

Offenbart wird auch eine andere Ausgestaltung, in es denkbar ist, dass die Zuordnungseinrichtung zur Auswahl des zu verwendenden Filaments eine rotatorisch verstellbare Einheit aufweist, in der Endabschnitte der Filamente, vorzugsweise auf einem Teilkreis magaziniert, aufgenommen sind, und die rotatorisch verstellbare Einheit mittels rotatorischer Verstellbewegung das jeweils zu verwendende Filament gegenüberliegend zu einer einzigen Führungsbahn in Richtung auf den Extruder positioniert. Hierbei muss beachtet werden, dass die von der Speichervorrichtung der Filamente kommenden Filamente durch die rotatorisch verstellbare Einheit nicht unzulässig tordiert werden. Diese Ausführung stellt kein Teil der Erfindung dar.

Offenbart wird auch eine Zuordnungseinrichtung zur Auswahl des zu verwendenden Filaments, die ein unbeweglich angeordnetes Bauelement aufweist, das alle Filamente über definierte Führungsbahnen einer einzigen Führungsbahn in Richtung auf den Extruder zuführt. Diese Ausführung stellt kein Teil der Erfindung dar. Dabei kann das unbeweglich angeordnete Bauelement eine beliebige Anzahl von Filamenten an dessen Eingang auf einen einzigen Ausgang zusammenführen und ohne aktive Bewegung der Zuordnungseinrichtung für die Führung der Filamente beim Wechselvorgang sorgen. Offenbart wird auch , dass das unbeweglich angeordnete Bauelement einen sich zur einzigen Führungsbahn in Richtung auf den Extruder verjüngenden Führungskegel aufweisen kann, in dem alle oder einzelne der verfügbaren Filamente jeweils mittels einzelner Führungskanäle oder Führungsnuten oder dgl. zu der einzigen Führungsbahn in Richtung auf den Extruder geführt sind. Man kann sich eine derartige Ausgestaltung des Führungskegels als unbeweglich angeordnetes Bauelement als eine Art Trichter oder Konus vorstellen, bei dem auf der Einlaufseite die Filamente auf einem größeren Teilkreis ankommen und durch konisch angeordnete Führungskanäle oder Führungsnuten auf eine auslaufseitig angeordnete, zentrale Führungsbahn in Richtung auf den Extruder geführt werden. Je weiter die Führungskanäle oder Führungsnuten zum Auslauf führen, umso näher kommen diese Führungskanäle oder Führungsnuten sich, bis sie sich gegenseitig durchdringen. Dabei können die Führungskanäle oder Führungsnuten oder dgl. zur Führung der verfügbaren Filamente radial, vorzugsweise kegelförmig radial, auf die einzige Führungsbahn in Richtung auf den Extruder hin ausgerichtet sein. Schiebt man nun eines der Filamente in Richtung auf den Auslauf zu, so wird dieses Filament die zentrale Führungsbahn in Richtung auf den Extruder erreichen, in sie eintreten und zum Extruder vorgeschoben werden können. Dadurch ist diese zentrale Führungsbahn in Richtung auf den Extruder aber für die anderen Filamente gesperrt. Zum Zeitpunkt des Filamentwechsels wird dieses bisher benutzte Filament dann abgeschnitten und das einlaufseitige Ende dieses Filaments kann dann etwas in Richtung auf die Einlaufseite zurück gezogen werden, so dass der Zugang zur zentralen Führungsbahn in Richtung auf den Extruder wieder frei wird und ein anderes Filament vorgeschoben und in die zentrale Führungsbahn in Richtung auf den Extruder eingeführt werden kann. Hierdurch ist ein mechanisch sehr einfacher und dadurch auch schneller Wechsel zwischen unterschiedlichen Filamenten möglich.

Weiterhin ist es vorteilhaft, wenn das Trennen des aktuell verarbeiteten Filaments durch Scherschneiden mittels zweier Schneiden ausführbar ist, die vorzugsweise über einen ziehenden pneumatischen Kurzhubzylinder sowie eine Hebelkonstruktion aufeinander zu bewegbar sind. In einer anderen Ausgestaltung kann das Trennen des aktuell verarbeiteten Filaments durch Scherschneiden mittels einer einzigen bewegten Schneide ausgeführt werden, die vorzugsweise über einen Schrittmotor und eine Exzenterscheibe betätigbar ist. Selbstverständlich sind auch vielfältige andere Schneide- oder Trenntechniken denkbar. Von Vorteil ist es weiterhin, dass das Filamentwechselsystem sowohl an neu entwickelten 3D-Druckern einsetzbar ist, aber auch an bestehenden 3D-Druckern einfach nachgerüstet werden kann. Hierzu ist lediglich zwischen dem Filamentspeicher und dem Extruder ein entsprechender Einbauplatz bereitzustellen, der auch durchaus deutlich von dem Extruder beabstandet angeordnet werden kann. Hierzu kann das Filamentwechselsystem als Zusatzmodul für jeden bereits bestehenden FLM-Drucker verwendet werden, so dass dieser dann kostengünstig zu einem Multimaterial- und Multicolor-System aufgewertet werden kann.

Gegenstand der Erfindung ist auch ein Verfahren nach Anspruch 9. Die Erfindung hinsichtlich des Verfahrens geht aus von einem Verfahren zum Wechseln von Filamenten unterschiedlicher Farbe und/oder unterschiedlichen Materials für die Fertigung von 3D-Druckteilen nach dem FLM-Verfahren, bei dem zwischen einer Speichervorrichtung für alle verwendeten Filamentstränge und einem Extruder mindestens eine Auswahleinrichtung zur Auswahl des jeweils zu verwendenden Filaments und mindestens eine Trenneinheit zum Abtrennen des vorher verwendeten Filaments angeordnet wird, wobei die Auswahleinrichtung eine Zuordnungseinrichtung aufweist, die für das jeweils verwendete Filament einen Abschnitt der Förderstrecke von der Speichervorrichtung zu dem Extruder bildet, beim Wechsel auf ein anderes Filament mittels der Trenneinheit das vorher verwendete Filament abgetrennt und das extruderseitig abgetrennte Stück dieses Filaments kontinuierlich weiter zu dem Extruder hin gefördert wird, in der Zuordnungseinrichtung das neu zu verwendende Filament passend zu der Förderstrecke zu dem Extruder positioniert wird, die durch die benötigte Zeit zur Positionierung des neu zu verwendenden Filaments entstandene Lücke zwischen weiter zu dem Extruder gefördertem Endbereich des vorher verwendeten Filaments und dem neu zu verwendenden Filament dadurch geschlossen wird, dass das neu zu verwendende Filament solange mit einer höheren Fördergeschwindigkeit als derjenigen des von dem Extruder geförderten vorherigen Filaments zu dem Extruder gefördert wird, bis das neu zu verwendende Filament den Endbereich des vorher verwendeten Filaments eingeholt hat, und anschließend beide Filamente nahtlos aufeinanderfolgend mit gleicher oder etwas höherer Fördergeschwindigkeit solange vorgeschoben werden, bis auch das neu zu verwendende Filament den Extruder erreicht hat und durch den Extruder weiter gefördert wird.

Ein verfahrensgemäß ablaufender Wechselvorgang für ein Filament wird dadurch eingeleitet, dass das vorher verwendete Filament passend abgeschnitten und der Rest noch verdruckt wird. Hierbei wird der Zeitpunkt des Abschneidens des vorher verwendeten Filaments dadurch festgelegt, dass die Restmenge des extruderseitig abgeschnittenen Filamentstrangs noch für das bestimmungsgemäße Drucken mit dem Material dieses Filaments ausreicht. Daher muss die Steuerung entsprechend vorher, basierend auf der Fördergeschwindigkeit des abgeschnittenen Filamentstrangs und des benötigten Druckvolumens mit diesem Filamentmaterial, den Zeitpunkt des Trennens bestimmen. Anschließend wird das neu zu verwendende Filament mittels einer Auswahleinrichtung bereitgestellt und dem abgetrennten Strang des vorher verwendeten Filaments solange in Richtung auf den Extruder aktiv und mit höherer Fördergeschwindigkeit als der Fördergeschwindigkeit des Extruders nachgeschoben, bis das neu zu verwendende Filament das vorher verwendete Filament eingeholt und der Extruder das neu zu verwendende Filament erfasst hat und es selbständig weiterfördert.

Durch die Zuordnungseinrichtung wird dabei das vorher verwendete Filament aus seiner Zuordnung zu der einzigen Führungsbahn von dem Filamentwechselsystem zu dem Extruder entfernt und das neu zu verwendende Filament passend zu der einzigen Führungsbahn zu dem Extruder angeordnet. Während der hierfür erforderlichen Zeit zieht der Antrieb des in Verarbeitungsrichtung weiter vorne angeordneten Extruders den verbleibenden Rest des vorher verwendeten Filaments ein und verarbeitet ihn im Druckkopf. Zunächst kann das neu zu verwendende Filament noch nicht nachgeschoben werden, so dass zwischen dem abgetrennten Ende des vorher verwendeten Filaments und dem Beginn des neu zu verwendenden Filaments eine Lücke entsteht. Ist der Wechselvorgang der Filamente in ihrer Zuordnung zu der einzigen Führungsbahn zu dem Extruder beendet, fördert die dem neu zu verwendenden Filament zugeordnete Fördereinrichtung aufgrund der Schaltstellung der Schalteinrichtung das neu zu verwendende Filament hinter dem vorher verwendeten Filament hinterher. Dadurch, dass die zur Förderung des neu zu verwendenden Filaments verwendete Fördergeschwindigkeit größer ist als die des Extruders, der den Rest des vorher verwendeten Filaments fördert, kann die Lücke zwischen dem vorher verwendeten und dem neu zu verwendenden Filament geschlossen werden, so dass beide Filamente nahtlos hintereinander her gefördert werden. Hierbei fördert die Fördereinrichtung der jeweiligen Schalteinrichtung das zukünftige Filament solange nach, bis das neu zu verwendende Filament das vorher verwendete Filament eingeholt und dieses vom Extruder erfasst und anschließend durch diesen weitergefördert wird. Ist dies der Fall, schaltet die Schalteinrichtung in eine Position um, in der das neu zu verwendende Filament die Schalteinrichtung weitgehend reibungsfrei durchlaufen kann. Die weitere Förderung erfolgt nun ausschließlich durch den Extruder, bis beim nächsten Wechselvorgang der beschriebene Prozess erneut durchlaufen wird. Durch das beschriebene Vorgehen ist es möglich, das neu zu verwendende Filament nahtlos hinter dem vorher verwendeten Filament zu fördern und gleichzeitig eine Übergangsstelle zwischen den Filamenten zu ermöglichen, die keine Schweißstelle oder andere Verbindungsstelle aufweist und damit einen drucktechnisch und festigkeitsmäßig unkomplizierten Übergang zwischen unterschiedlichen Druckmaterialien erlaubt.

Aus der Fördergeschwindigkeit des abgetrennten Filaments und dem Abstand zwischen Filamentwechselsystem und Düse kann die Zeit ermittelt werden, während der noch das vorherige Filament zur Erzeugung der Drucksubstanz in dem Extruder benutzt wird. Der Filamentwechsel muss dann um diese Zeit früher erfolgen, als der gewünschte Materialwechsel an der Düse erfolgen soll. Der Filamentwechsel nimmt einen gewissen (wenn auch kleinen) Zeitraum in Anspruch, so dass sich zwischen dem Anfang des neu zu verwendenden Filaments und dem Ende des vom Extruder weitergeförderten, vorher verwendeten Filaments ein Freiraum bildet. Dieser Freiraum kann dadurch kompensiert werden, dass die Antriebseinheit unmittelbar nach dem Filamentwechsel schneller läuft, bis das neu zu verwendende Filament das vorher verwendete Filament eingeholt oder der Extruder das neu zu verwendende Filament erfasst hat. Jetzt wird die Schalteinrichtung zum Festklemmen, Fördern oder Freigeben des neu zu verwendenden Filaments auf "Freigeben" umgeschaltet, so dass der Extruder den Antrieb zwecks weiterer Förderung des neu zu verwendenden Filaments übernimmt und diese Förderbewegung nicht durch die Schalteinrichtung behindert wird. Durch dieses Vorgehen wird der Extrusionsvorgang nahtlos fortgesetzt und ein definierter Übergang zwischen den am Bauteil verdruckten unterschiedlichen Materialien und Farben geschaffen. Weiterhin wird jeglicher Verlust an Material in Form von Verschnitt bzw. Abfall vermieden, was neben der Kosteneinsparung auch dem Umweltschutz dient.

Von Vorteil für den Ablauf des Wechselvorgangs ist es, wenn das vorratsseitig abgetrennte Stück des vorher verwendeten Filaments durch eine Schalteinrichtung ein Stück weit entgegen der Förderrichtung der Filamente zurückgezogen wird. Hierdurch wird verhindert, dass dieser Endbereich des vorher verwendeten Filaments den Wechselvorgang behindert, gleichzeitig kann die Positionierung des Endbereichs des vorher verwendeten Filaments eine definierte Stellung für eine spätere Einwechslung dieses Filaments ermöglichen. Ein Schneiden ist auch möglich ohne anschließendes Zurückziehen, indem die Schneide bei jedem Schneidvorgang an allen Filamenten vorbei bewegt wird.

Gemäß der Erfindung, wird die Positionierung des neu zu verwendenden Filaments durch eine lineare Verschiebebewegung der Zuordnungseinrichtung vorgenommen, die das neu zu verwendende Filament passend gegenüberliegend zu einer einzigen Führungsbahn in Richtung auf den Extruder positioniert. Hierzu wird nach dem Ausführen des Trennens und Außer-Eingriffnehmens des vorher verwendeten Filaments und der linear verschieblichen Zuordnung von neu zu verwendendem Filament und Führungsbahn zu dem Extruder das neu zu verwendende Filament in Richtung auf diese Führungsbahn zu dem Extruder zu bewegt und tritt in diese Führungsbahn ein.

In einer anderen nicht erfindungsgemäßen Ausgestaltung des Vorgangs der Zuordnung von Filament und Führungsbahn zu dem Extruder ist es denkbar, dass die Positionierung des neu zu verwendenden Filaments durch eine rotatorische Drehbewegung der Zuordnungseinrichtung vorgenommen wird, die das neu zu verwendende Filament passend gegenüberliegend zu der einzigen Führungsbahn in Richtung auf den Extruder positioniert.

Die Erzeugung von rotatorischen Drehbewegungen ist ggf. konstruktiv einfacher als eine lineare Verschiebewegung zu realisieren.

Es ist aber in einer anderen nicht erfindungsgemäßen Ausgestaltung auch denkbar, dass die Positionierung des neu zu verwendenden Filaments in einem unbeweglich angeordneten Bauelement der Zuordnungseinrichtung, vorzugsweise einem in Richtung auf den Extruder sich verjüngenden Führungskegel oder konischen Führungsbahnen, dadurch vorgenommen wird, dass das vorher verwendete Filament ein Stück weit entgegen der Förderrichtung der Filamente zurück gezogen und das neu zu verwendende Filament zu der zentralen Führungsbahn in Richtung auf den Extruder vorgeschoben wird. Hierzu kann das unbeweglich angeordnete Bauelement einen sich zur einzigen Führungsbahn in Richtung auf den Extruder verjüngenden Führungskegel aufweisen, in dem alle oder einzelne der verfügbaren Filamente jeweils mittels einzelner, etwa konisch aufeinander zulaufender Führungskanäle oder Führungsnuten zu der einzigen, zentral angeordneten Führungsbahn in Richtung auf den Extruder geführt sind. Schiebt man nun eines der Filamente in Richtung auf den Auslauf zu, so wird dieses Filament die zentrale Führungsbahn in Richtung auf den Extruder erreichen, in sie eintreten und zum Extruder vorgeschoben werden können. Dadurch ist diese zentrale Führungsbahn in Richtung auf den Extruder aber für die anderen Filamente gesperrt. Zum Zeitpunkt des Filamentwechsels wird dieses bisher benutzte Filament dann abgeschnitten und das einlaufseitige Ende dieses Filaments kann dann etwas in Richtung auf die Einlaufseite zurück gezogen werden, so dass der Zugang zur zentralen Führungsbahn in Richtung auf den Extruder wieder frei wird und ein anderes Filament vorgeschoben und in die zentrale Führungsbahn in Richtung auf den Extruder eingeführt werden kann.

Von besonderem Vorteil ist es, wenn eine Schalteinrichtung und eine Antriebsvorrichtung der Auswahleinrichtung das neu zu verwendende Filament solange dem vorher verwendeten Filament nachfördern, bis auch das neu zu verwendende Filament vom Extruder erfasst und anschließend durch diesen weitergefördert wird. Danach kann dann die Schalteinrichtung derart umgeschaltet werden, dass das neu zu verwendende Filament die Schalteinrichtung weitgehend reibungsfrei durchlaufen kann. Hierdurch ist für die Durchführung des Filamentwechsels nur wenig apparatetechnischer Aufwand zu betreiben und die Betätigung der entsprechenden Stellelemente einfach auszuführen.

Das Filamentwechselsystem kann in Förderrichtung des Filaments hinter dem Filamentspeicher und vor dem Extruder angeordnet werden. Darüber hinaus ist bei dem 3D-Drucker nur ein einziger Extruder erforderlich.

Offenbart wird auch ein Extruder für ein Filamentwechselsystem, bei dem im Bereich des Extruders, vorzugsweise im Bereich unmittelbar vor der Austrittsdüse, Erwärmungs- und/oder Kühlungseinrichtungen angeordnet sind, mit denen das Material aufeinander folgender Filamentabschnitte aus Filamentmaterialien unterschiedlicher Eigenschaften, vorzugsweise unterschiedlicher Schmelzeigenschaften, jeweils passend temperierbar ist. Gerade bei schnellem Wechsel im Zuge der Verarbeitung von unterschiedlichen Filamentmaterialien ist es von großer Bedeutung, dass die Erwärmung jedes der unterschiedlichen Filamentmaterialien optimiert wird. Wird ein bei höherer Temperatur schmelzendes Filamentmaterial im Anschluss an ein bei niedrigerer Temperatur schmelzendes Filamentmaterial verarbeitet, so kann schnell eine Anpassung der Verarbeitungstemperatur erreicht werden, indem die Erwärmungseinrichtung das Filament höher erhitzt. Wird hingegen ein bei niedrigerer Temperatur schmelzendes Filamentmaterial im Anschluss an ein bei höherer Temperatur schmelzendes Filamentmaterial verarbeitet, so ist bei herkömmlichen Extrudern die Restwärme des Extruders aufgrund der vorherigen Verarbeitung des bei höherer Temperatur schmelzenden Filamentmaterials noch zu hoch, um das bei niedrigerer Temperatur schmelzende Filamentmaterial optimal zu verarbeiten. Es kann z.B. dazu führen, dass das bei niedrigerer Temperatur schmelzende Filamentmaterial zu flüssig wird und sich dadurch nicht mehr ordnungsgemäß verarbeiten lässt oder sogar zerstört wird. Dem kann bei herkömmlichen 3D-Druckern nur durch langsamere Verarbeitung der Filamentstränge im Bereich des Wechsels zwischen den Filamentmaterialien entgegen gewirkt werden, so dass der Extruder mehr Zeit zur passiven Anpassung seiner Verarbeitungstemperatur bekommt. Gerade bei detaillierten Druckaufgaben mit einer schnellen Abfolge der Verarbeitung unterschiedlicher Filamentmaterialien wird hierdurch aber die notwendige Bearbeitungszeit stark erhöht.

Die Offenbarung hinsichtlich des Extruders geht daher den Weg, aktiv die Temperatur des Filamentstrangs durch Erhitzen und Abkühlen zu beeinflussen, abhängig davon, welche Temperatur das jeweilige Filamentmaterial gerade erfordert. So kann sehr schnell der Filamentstrang gekühlt werden, wenn nach einem höher schmelzenden Filamentmaterial ein bei niedrigerer Temperatur schmelzendes Filamentmaterial verarbeitet werden soll, indem zumindest im Bereich des durchlaufenden Filamentstrangs dieser Durchtrittsbereich aktiv gekühlt wird und damit auch das bei niedrigerer Temperatur schmelzende Filamentmaterial wieder optimal temperiert durch den Extruder hindurch läuft. Da hierzu nicht wie bekannt der ganze Extruder oder zumindest volumenmäßig große Bauteile des Extruders komplett gekühlt werden müssen, sondern gezielt vornehmlich nur der Bereich des durchlaufenden Filamentstrangs gekühlt wird, kann diese Temperierung wesentlich schneller als bisher bekannt erfolgen und die thermische Trägheit des Extruders umgangen werden. Somit können auch kurze Abschnitte des durchlaufenden Filamentstrangs aus unterschiedlich zu temperierenden Filamentmaterialien schnell und unkompliziert erhitzt und ggf. wieder passend abgekühlt werden. Neben der Verbesserung der Prozessführung des Druckvorgangs ergibt sich insbesondere der Vorteil, dass beim Wechsel zwischen Filamenten aus unterschiedlichen Werkstoffen die Temperatur sehr schnell geändert werden kann, so dass die für den jeweiligen Werkstoff des Filaments optimale Verarbeitungstemperatur innerhalb kürzester Zeit erreicht werden kann.

Von besonderem Vorteil ist es, wenn die Erwärmungs- und/oder Kühlungseinrichtungen im Bereich des Extruders im Wesentlichen auf den gleichen Abschnitt des Filamentstrangs aufeinander folgender Filamentabschnitte aus Filamentmaterialien unterschiedlicher Eigenschaften einwirkt. Hierdurch wird nur ein geringer Übergangsbereich zwischen den unterschiedlich zu temperierenden Filamentmaterialien benötigt und die Umstellung der Temperatur im Bereich des durchlaufenden Filamentstrangs aus unterschiedlich zu temperierenden Filamentmaterialien erfolgt quasi schlagartig, zumindest jedoch in sehr kurzer Zeit. Da dieser Ideallösung teilweise konstruktive Gegebenheiten entgegenstehen, sollen sich der Heizbereich der Erwärmungseinrichtung und der Kühlbereich der Kühlungseinrichtungen so weit wie möglich überschneiden.

Hierbei ist es in einer ersten Ausgestaltung denkbar, dass die Erwärmungseinrichtung mindestens eine Induktionsspule aufweist, die eine induktionsgeeignete Führung für den Filamentstrang im Bereich des Extruders zumindest abschnittsweise umgibt. Hierbei wird das Filamentmaterial indirekt mithilfe von Wärmeleitungseffekten aufgeschmolzen. Dabei besteht die Führung des Filaments aus einem für das Induktionsprinzip geeigneten z.B. ferromagnetischen Material mit hohem spezifischem elektrischem Widerstand (wie z.B. ferromagnetischem Stahl), welches von einer Induktionsspule z.B. spiralförmig umwickelt ist. Dieses Aufheizprinzip besitzt den Vorteil einer sehr schnellen Anpassungsmöglichkeit der Wärmezufuhr, sodass hinsichtlich eines höheren Temperaturbedarfs kurzfristig reagiert werden kann.

In einer Ausgestaltung ist es denkbar, dass die Kühlungseinrichtung ein fluidkeitsleitendes rohrartiges Bauelement oder ein wärmeleitendes Leitelement aufweist, das die Führung für den Filamentstrang im Bereich des Extruders zumindest abschnittsweise umgibt oder an der Führung anliegt, wobei vorteilhaft das fluidleitende rohrartige Bauelement von einer Kühlflüssigkeit oder einen Kühlgas durchflossen ist. Eine derartige Fluidkühlung arbeitet zuverlässig und lässt sich gut und genau steuern, um die gewünschte Temperatur des jeweiligen Filamentmaterials schnell und passend einstellen zu können. Im Falle der Verwendung eines passiv wärmeleitenden Leitelements kann überschüssige Wärme im Bereich der Führung für den Filamentstrang von dem Filamentstrang weg geleitet und dort ggf. über Gebläse oder dgl. an die Umgebung abgegeben werden. Diese passive Kühlung ist träger, aber auch kostengünstiger als eine aktive Kühlung mittels z.B. Fluidkühlung.

Weiterhin ist es denkbar, dass die Kühlungseinrichtung ein elektrisch betreibbares kühlendes Element, vorzugsweise ein Peltierelement oder dgl. aufweist. Hierbei kann über die elektrische Ansteuerung derartiger kühlender Elemente direkt im Bereich des zu temperierenden Filamentstrangs der Filamentstrang aktiv gekühlt werden. Ein derartiges Peltierelement kann über eine entsprechende Ansteuerung ebenfalls zusätzlich oder alternativ zum Erhitzen des Filamentstrangs genutzt werden.

Von Vorteil ist es bei allen derartigen Gestaltungen, wenn die Erwärmungs- und/oder Kühlungseinrichtungen so ineinander gewunden die Führung für den Filamentstrang umgeben, dass sie im Wesentlichen auf den gleichen Abschnitt des Filamentstrangs einwirken. Hierdurch kann sowohl die Erwärmung als auch die Abkühlung des Filamentstrangs unmittelbar auf den gleichen Bereich des Filamentstrangs einwirken und sehr punktuell für eine Änderung der Temperierung des Filamentstrangs genutzt werden, wodurch nahezu schlagartige Temperaturänderungen im Filamentstrang etwa an der Trennstelle unterschiedlicher Materialabschnitte des Filamentstrangs ermöglicht werden. Denkbar ist es etwa, dass die Induktionsspule der Erwärmungseinrichtung in Form von Windungen um das Führungsrohr des Filamentstrangs herum verläuft, allerdings etwas versetzt zu der gleichartigen Windung der Kühlungseinrichtung, sodass sich zwei über denselben Bereich wirkende Spiralgänge ergeben.

In einer weiteren Ausgestaltung ist es auch denkbar, dass die Erwärmungseinrichtung einen Laser aufweist, der durch eine für die Laserstrahlung optisch neutrale Umhüllung und Führung für den Filamentstrang auf den Filamentstrang direkt einwirkt und diesen Filamentstrang direkt erhitzt. Eine Temperaturanpassung kann unter Verwendung der Lasererwärmung durch die direkte Energieeinbringung in das Kunststoffmaterial des Filamentstrangs innerhalb von Bruchteilen von Sekunden erfolgen, da lediglich die zugeführte Leistung z.B. über den einstellbaren Strom des Lasers verändert werden muss. Die Einbringung der erforderlichen Wärme wird dabei nicht indirekt über das Wärmeleitungsprinzip, sondern über eine direkte Einbringung der erforderlichen Energie in das Filament mithilfe von Absorptionsvorgängen innerhalb des Filaments vorgenommen. Durch die Verwendung eines Lasers kann außerdem eine deutlich höhere Extrusionsgeschwindigkeit im Vergleich zu herkömmlichen 3D-Druckern nach dem FLM-Verfahren erreicht werden, da diese nur das Prinzip der Wärmeleitung nutzen.

Hierbei kann in weiterer Ausgestaltung die Wärmeerzeugung in dem Filamentstrang dadurch verbessert werden, dass die optisch neutrale Umhüllung für den Filamentstrang von einem für den Wellenlängenbereich der Laserstrahlung stark reflektierenden Material umgeben ist, das den Laserstrahl durch vielfache Reflektion immer wieder durch den Filamentstrang reflektiert und durch die so vervielfachte Wechselwirkung des Laserstrahls mit dem Filamentstrang die Erwärmung des Filamentstrangs stark erhöht. In diesen Bereich wird der Laserstrahl eingekoppelt und durch die Reflektion so lange und häufig durch das Material des Filamentstrangs geschickt, bis die Energie vollständig durch den Filamentstrang aufgenommen wurde.

Weiter ist es von Vorteil, wenn eine Kühlungseinrichtung den Extruder im Bereich der Einkopplung und Reflektion der Laserstrahlung kühlt. Diese Kühlung besitzt im Vergleich zu der aktiven Kühlung des Filamentstrangs jedoch nicht die Aufgabe, unmittelbar die Temperatur des Filamentstrangs selbst herabzusetzen. Vielmehr wird die aktive Kühlung der Lasereinrichtung im Bereich des Extruders in diesem Zusammenhang verwendet, um die Wärme abzuführen, die als Folge von Wärmeleitungseffekten vom Filament ausgehend als Abwärme im Extruder entsteht. Zusätzlich sorgt die Einheit dafür, den Anschluss des Lasers vor zu hohen Temperaturen zu schützen.

Der Extruder wird in Kombination mit dem Filamentwechselsystem gemäß Anspruch 1 in einem 3D-Drucker verwendet.

Mithilfe des Extruders und der erfindungsgemäßen Filamentwechseleinrichtung wird eine beliebige Kombination unterschiedlicher Kunststoffmaterialien und -färben in einem einzigen Produkt ermöglicht. Dies führt unter der Voraussetzung, dass die Filamentabschnitte korrekt bereitgestellt werden, sowohl zu einem unterbrechungsfreien als auch abfallfreien Herstellungsprozess mithilfe eines einzigen Extruders. Somit wird eine enorm zeitsparende und kostengünstige Produktion ermöglicht. Eine besonders bevorzugte Ausführungsform des erfindungsgemäßen Filamentwechselsystems zeigt die Zeichnung.

Es zeigen:
- Figur 1: - die prinzipielle Anordnung des Filamentwechselsystems an einem FLM-Drucksystem,
- Figur 2: - eine detaillierte ebene Draufsicht auf eine erste Ausgestaltung des Filamentwechselsystems mit einer linear verschieblichen Zuordnungseinrichtung,
- Figur 3: - eine Ansicht des Gehäuses des Filamentwechselsystems gemäß Figur 2 mit darin eintretenden Filamenten und der einzelnen austretenden Führungsbahn zum Extruder,
- Figur 4: - eine erste räumliche Ansicht der Auswahleinrichtung des Filamentwechselsystems gemäß Figur 2 mit daran angeordnetem Filamentführungen, der Trenneinheit und den Schalteinrichtungen,
- Figur 5: - eine weitere räumliche Ansicht der Auswahleinrichtung gemäß Figur 4,
- Figur 6: - eine weitere räumliche Ansicht der Auswahleinrichtung gemäß Figur 4,
- Figur 7: - eine räumliche Ansicht einer einzelnen Schalteinrichtung gemäß Figur 4 mit daran angeordneter Antriebseinrichtung im Antriebszustand mit an die Antriebseinrichtung angedrücktem Zustand des Filaments,
- Figur 8a: - eine räumliche Ansicht der Schalteinrichtung gemäß Figur 7 ohne Antriebsrolle,
- Figur 8b: - eine ebene Ansicht der Schalteinrichtung gemäß Figur 7 im freigeschalteten Zustand,
- Figur 8c: - eine ebene Ansicht der Schalteinrichtung gemäß Figur 7 im geklemmten Zustand des Filaments,

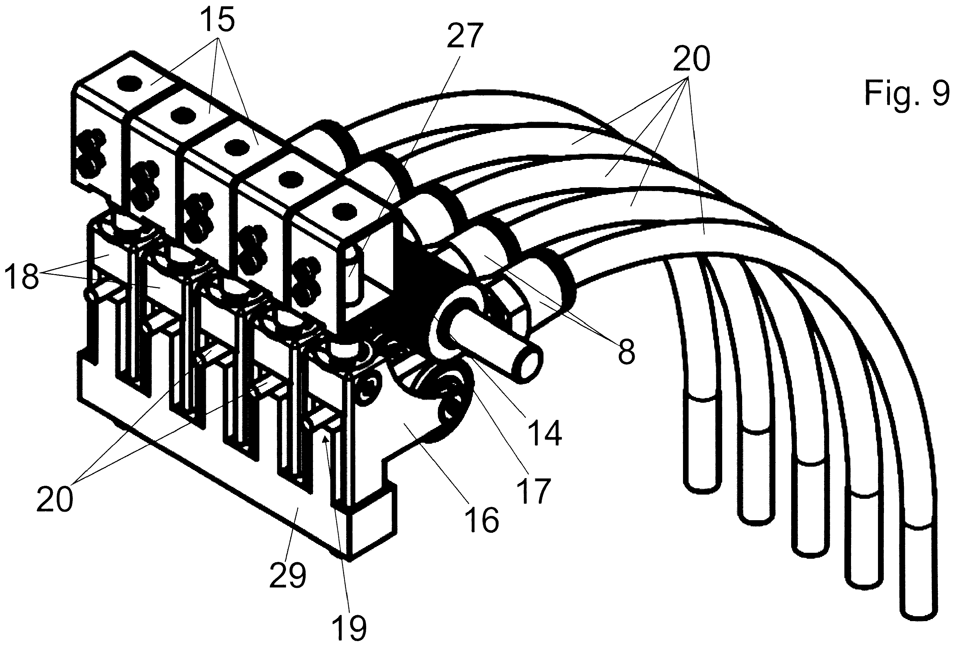

- Figur 9: - eine räumliche Ansicht nebeneinander angeordneter Schalteinrichtungen mit daran angeordneter Antriebseinrichtung im Antriebszustand,
- Figur 10: - die prinzipielle nicht erfindugsgemäße Anordnung einer weiteren Ausgestaltung des Filamentwechselsystems mit einer kegelförmig ausgebildeten, unbeweglichen Zuordnungseinrichtung an einem FLM-Drucksystem,
- Figur 11: - eine Ansicht des Gehäuses des Filamentwechselsystems gemäß Figur 10 mit darin eintretenden Filamenten und der einzelnen Führungsbahn zum Extruder sowie einer anderen Ausgestaltung der Trenneinrichtung,
- Figur 12: - eine teilweise aufgeschnittene räumliche Darstellung der Auswahleinrichtung gemäß Figur 10 mit einem zwischen dem Filamentspeicher und dem Extruder durchlaufenden Filament,
- Figur 13: - eine teilweise aufgeschnittene räumliche Darstellung der Auswahleinrichtung gemäß Figur 12 beim Schneiden des bisher verwendeten Filaments,
- Figur 14: - eine teilweise aufgeschnittene räumliche Darstellung der Auswahleinrichtung gemäß Figur 12 nach dem Zurückziehen des bisher verwendeten Filaments.
- Figur 15: - eine Teilansicht des Extruders mit Erwärmungseinrichtung, Kühlungseinrichtung und Düse unter Verwendung einer Induktionsspule,
- Figur 16: - eine Schnittdarstellung der Ansicht gemäß Figur 15 ,
- Figur 17: - eine mögliche Anordnung einer Erwärmungseinrichtung unter Verwendung eines Lasers für den Aufschmelzvorgang eines Filaments,

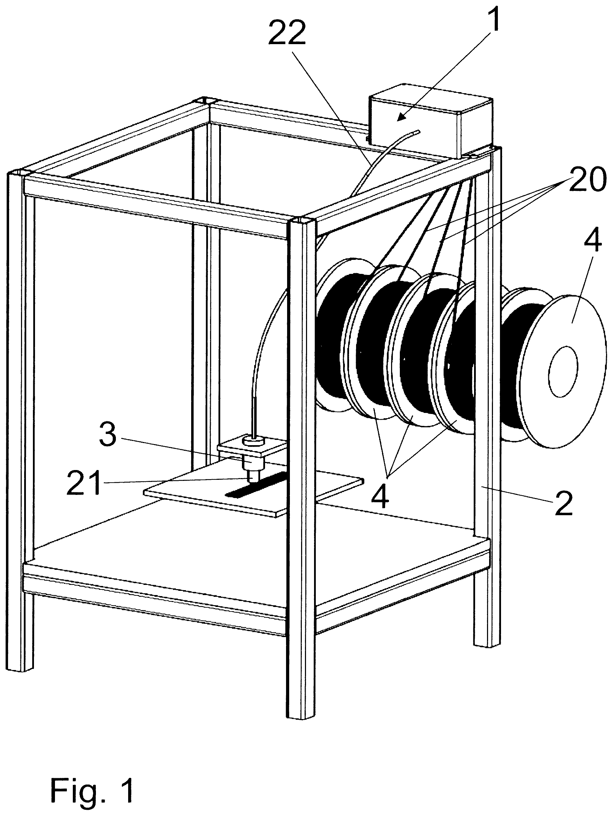

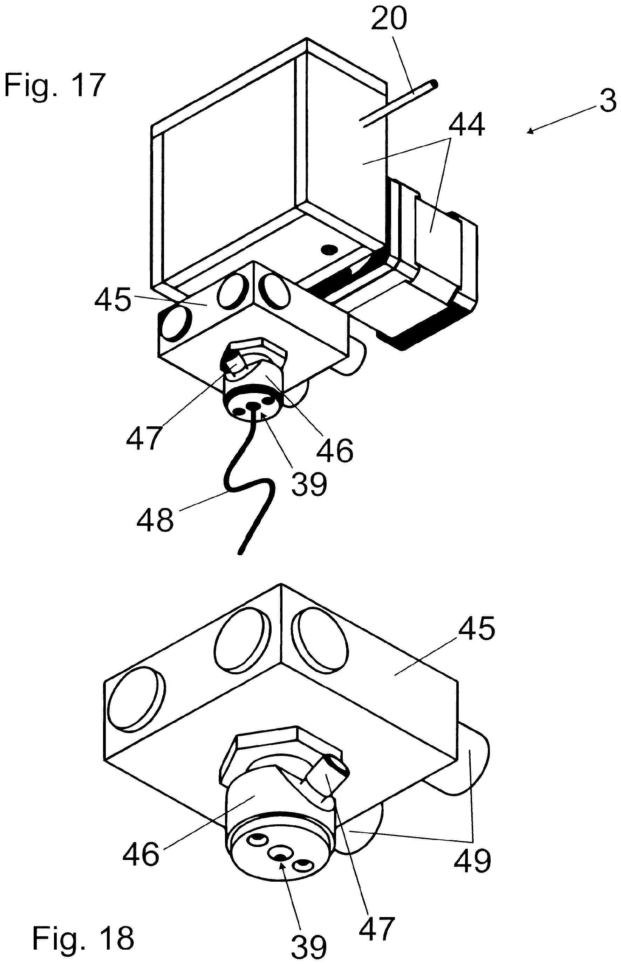

Figur 18- Erwärmungseinrichtung, Kühlungseinrichtung und Düse unter Verwendung eines Lasers. Figur 1 zeigt die prinzipielle Anordnung des Filamentwechselsystems 1 an einem FLM-Drucksystem. Das Filamentwechselsystem 1 ist auf dem Rahmen 2 des FLM-Druckers und in Materialflussrichtung dem Extruder 3 vorgeschaltet angeordnet. Exemplarisch sind fünf von beliebig vielen denkbaren Filamentrollen 4 mit unterschiedlichen Filamenten 20 gezeigt. Dem Filamentwechselsystem 1 werden hier als Beispiel also fünf Filamente 20 zugeführt. Vom Filamentwechselsystem 1 wird das für den momentanen Druck ausgewählte Filament 20 in einer schlauchförmigen Führungsbahn 22 dem Extruder 3 und von diesem dem Druckkopf 21 zugeführt.

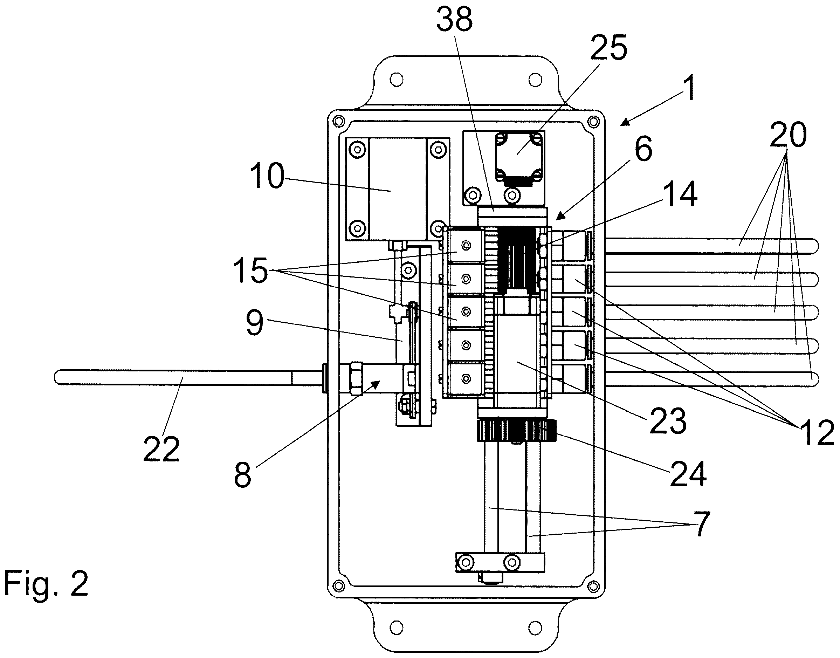

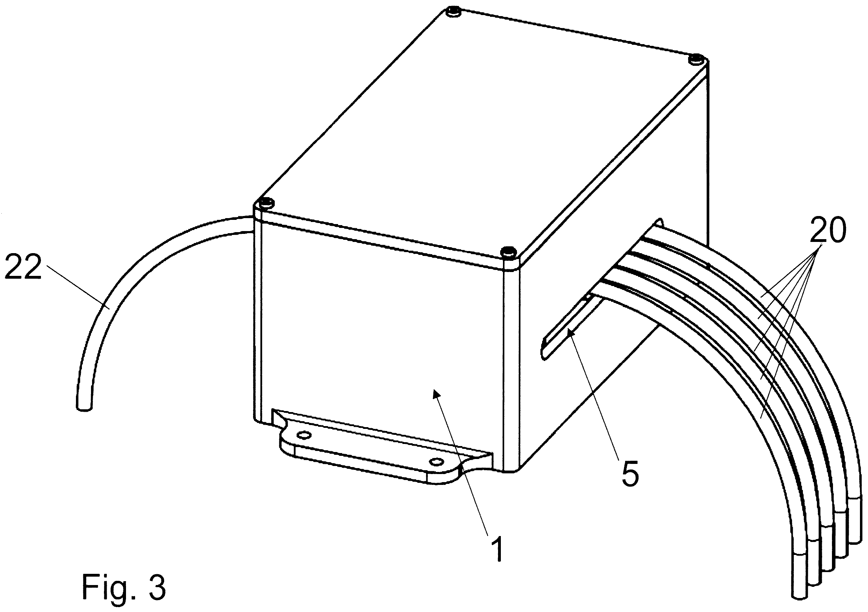

Figur 2 zeigt eine detailliertere ebene Draufsicht auf das Filamentwechselsystem 1. Exemplarisch werden an der rechten Seite fünf verschiedene, von den Filamentrollen 4 kommende Filamente 20 in das Innere des Gehäuses des Filamentwechselsystems 1 eingeführt, während an der linken Seite nur ein einziges ausgewähltes Filament 20 in einer schlauchförmigen Führungsbahn 22 zum Extruder 3 weitergefördert wird. Der in der Figur 3 besser erkennbare Schlitz 5 im Bereich der Einlässe 12 für die Filamente 20 ist erforderlich, weil die Führungen mit den Schalteinrichtungen 15 der fünf Filamente 20 linear und quer zur Förderrichtung der Filamente 20 verschoben werden, um das jeweils ausgewählte Filament 20 mittels der Auswahleinheit 6 zu positionieren.

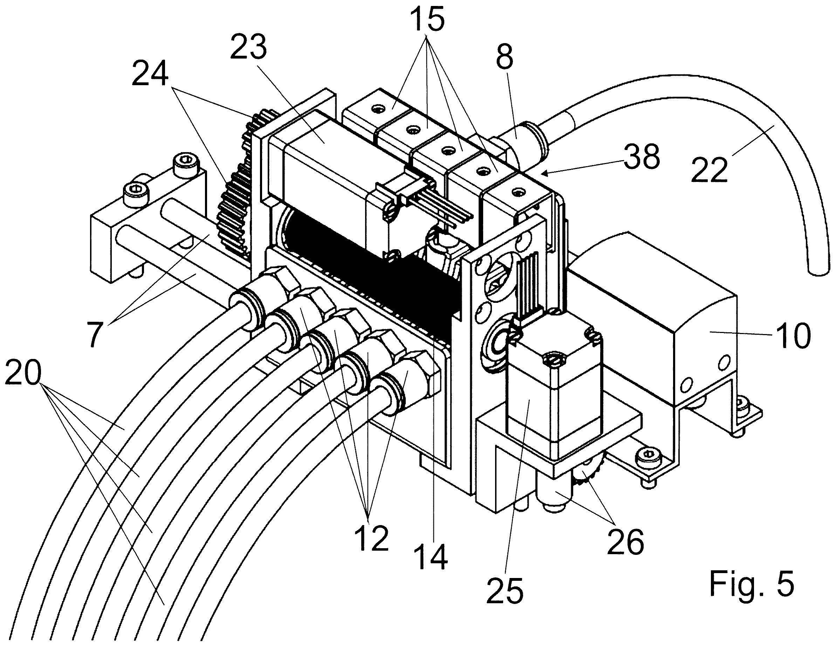

Die Auswahleinheit 6 des Filamentwechselsystems 1 dient zur wahlweisen Zuordnung des jeweils benötigten Filaments 20 zu der schlauchförmigen Führungsbahn 22 und damit zu dem Extruder 3. Die Auswahleinheit 6 trägt die Führungen 12 für die fünf Filamente 20 und ist mittels eines in der Figur 5 besser erkennbaren Antriebs aus einem Schrittmotor 25 und einem Winkelgetriebe 26 entlang der Linearführungen 7 so quer zur Förderrichtung der Filamente 20 verschieblich, dass das jeweils ausgewählte Filament 20 vor dem Auslass 8 der Auswahleinheit 6 positioniert und in die schlauchförmige Führungsbahn 22 eingeführt und damit zu dem Extruder 3 gefördert werden kann. Die Auswahleinheit 6 weist ein hier lineares, angetriebenes Magazin auf, das eine Anzahl von Führungselementen 12 besitzt, die der maximalen Anzahl der zu verarbeitenden Filamente 20 entspricht. Dem steht ein einziges Führungselement 22 gegenüber, das die Führung des ausgewählten Filaments 20 zum Extruder 3 übernimmt. Das Filament 20, dessen Führungselement 12 des Magazins dem Führungselement 22 zum Extruder 3 gegenübersteht, kann verarbeitet werden.

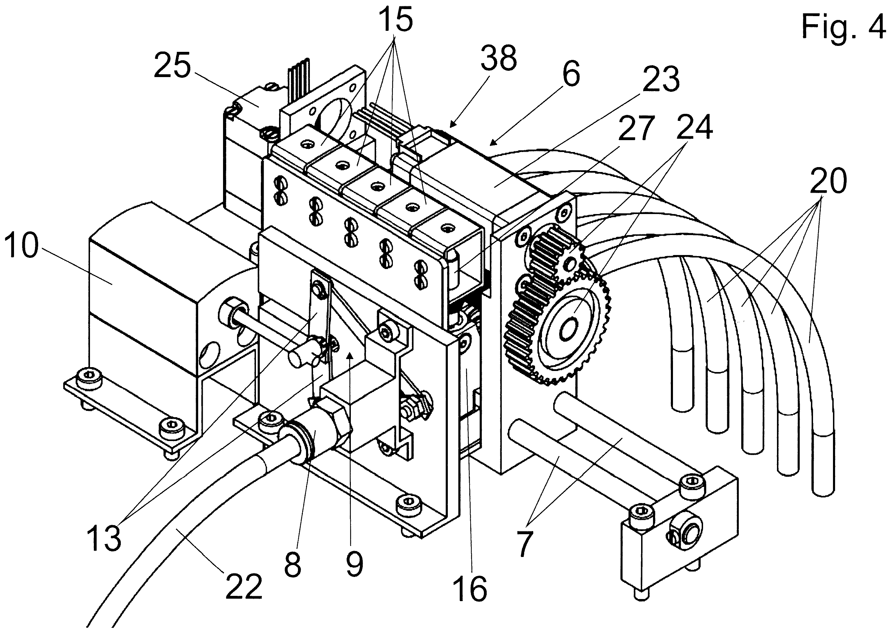

Zwischen der Auswahleinheit 6 und dem Auslass 8 befindet sich eine im Ganzen mit der Sachnummer 9 bezeichnete Trenneinheit, die über einen ziehend wirkenden Pneumatikzylinder 10 angetrieben wird und in Figur 4 detaillierter zu erkennen ist. Der ziehend wirkende Pneumatikzylinder 10 bewegt die zwei Scherenmesser 11 über zwei Hebel 13 und trennt dabei das Filament 20, das durch eine in den Figuren 2 und 4 nicht erkennbare Bohrung 30 in den Auslass 8 geführt wird, die nahe an der Lagerung der Scherenmesser 11 liegt. Mit dieser Trenneinheit 9 kann das gerade zur Bearbeitung benutzte Filament 20 glatt abgeschnitten werden, wodurch der im Weiteren beschriebene Wechselvorgang eingeleitet wird. Das abgeschnittene Filament 20 wird anschließend durch den Extruder 3 weiter gefördert und das Material dieses abgeschnittenen Filaments 20 verdruckt.

In der Figur 2 und besser erkennbar in den Figuren 4 und 5 sind die Einrichtungen des Filamentwechselsystems 1 zu erkennen, mit denen die eigentlichen Vorgänge beim Wechseln der Filamente ausgeführt werden. Hierbei wirken für jedes der einlaufenden Filamente 20 vorhandene Schalteinrichtungen 15, eine gemeinsame und von einem Schrittmotor 24 und einer Getriebestufe 24 angetriebene Antriebsrolle 14 sowie die lineare Führung 7 und der die Auswahleinheit 6 positionierende Antrieb aus Schrittmotor 25 und Winkelgetriebe 26 zusammen. Die Schalteinrichtungen 15 haben hierbei zuerst die Aufgabe, die Filamente gemeinsam mit der Antriebsrolle 14 in Richtung auf den Extruder 3 zu fördern, wenn das richtige Filament 20 ausgewählt und gegenüberliegend zu der schlauchförmigen Führungsbahn 22 positioniert wurde. Hierzu wiederum wird die schlittenartig auf den Führungen 7 quer bewegliche Auswahleinheit 6 von Schrittmotor 25 und Winkelgetriebe 26 so angesteuert, dass das jeweils neu benötigte Filament 20 in seinem Einlass 12 genau gegenüberliegend zu dem Auslass 8 der schlauchförmigen Führungsbahn 22 positioniert wird. Fluchten der zum ausgewählten Filament 20 gehörige Einlass 12 und Auslass 8 miteinander, kann das ausgewählte Filament 20 in den Auslass 8 und damit in die schlauchförmige Führungsbahn 22 eingeführt und von da zum Extruder 3 gefördert werden. Besonders vorteilhaft ist die Verwendung einer einzigen gemeinsamen breiten Antriebsrolle 14, die alle Filamente antreiben kann. Diese Anordnung ist insbesondere in Kombination mit einer linear verschiebbaren Auswahleinheit 6 sinnvoll.

Dieser Fördervorgang wiederum wird von der zu dem ausgewählten Filament 20 gehörigen Schalteinrichtung 15 bewirkt, indem diese wie noch nachstehend beschrieben das ausgewählte Filament 20 gegen die sich drehende Antriebsrolle 14 drückt und damit das ausgewählte Filament 20 reibschlüssig in den Auslass 8 und damit in die schlauchförmige Führungsbahn 22 gefördert wird.

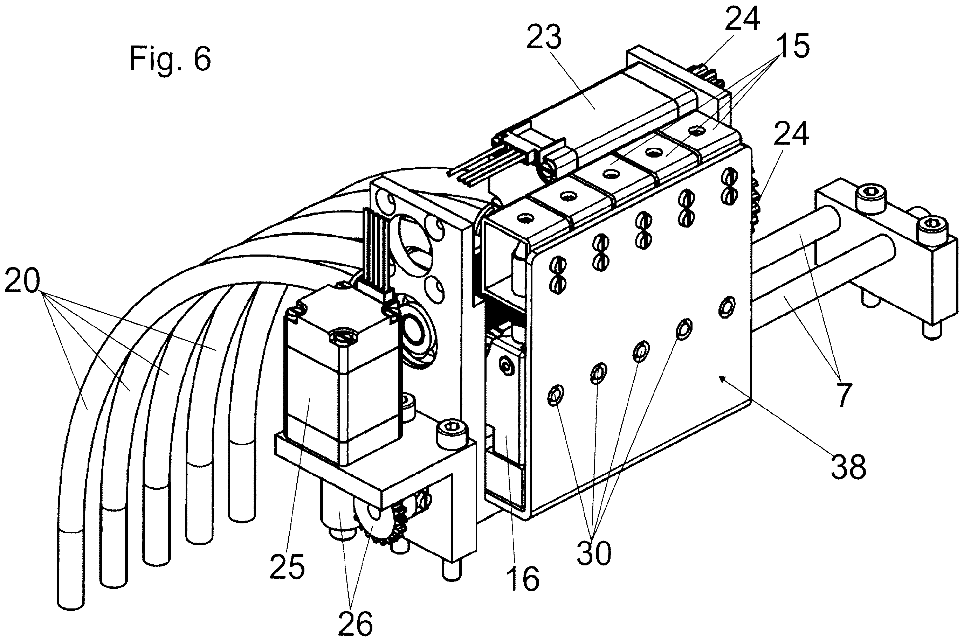

Die genauere Funktion und der Aufbau der Schalteinrichtungen 15 lassen sich anhand der Figuren 6 bis 8 besser erkennen und erläutern.

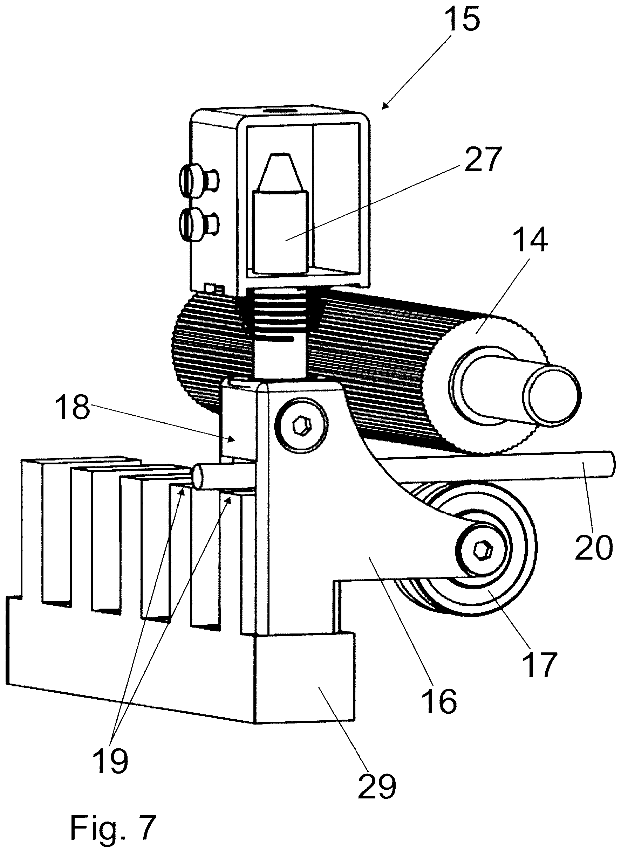

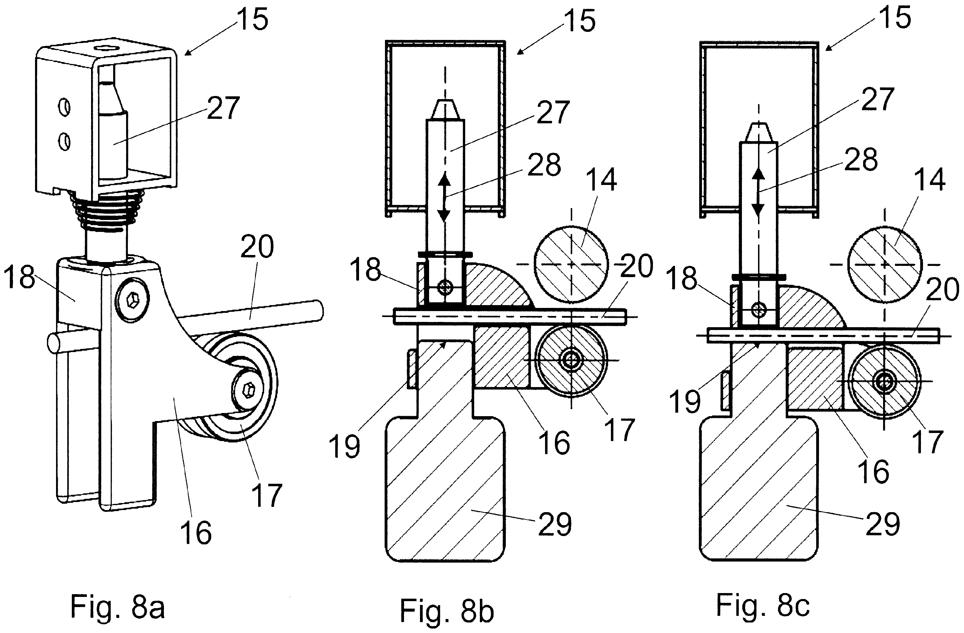

In Figur 6 sind die hier fünf Schalteinrichtungen 15, die neben dem Fördern der fünf Filamente 20 auch zum Festklemmen oder Freigeben der fünf Filamente 20 benutzt werden, dargestellt. In den Figuren 7 und 8 sind jeweils einzelne Schalteinrichtungen 15 vergrößert dargestellt. Bei Bedarf treibt eine gemeinsame Antriebsrolle 14 eines der Filamente 20 an, sofern dies durch die jeweilige Schalteinrichtung 15 ermöglicht wird. Es kann aber auch für jede Schalteinrichtungen 15 eine eigene Antriebsrolle 14 vorgesehen werden.

Die Funktion einer einzelnen solchen Schalteinrichtung 15 ist in Figur 7 vergrößert gezeigt. Ein senkrecht verschieblicher Rahmen 16 weist eine Andruckrolle 17 und eine Klemmbacke 18 auf. Der Antrieb zur Verschiebung des Rahmens 16 ist als Solenoid 27 dargestellt, der in Verstellrichtung 28 ansteuerbar ist. Wird der Rahmen 16 nach oben geschoben, drückt die Andruckrolle 17 das Filament 20 gegen die Antriebsrolle 14, so dass das Filament 20 durch den Antrieb 23, 24 der Antriebsrolle 14 bei geeigneter Drehrichtung der Antriebsrolle 14 in Richtung auf die schlauchförmige Führungsbahn 22 gefördert wird. Wird der verschiebliche Rahmen 16 hingegen nach unten verschoben (siehe Figur 8c), drückt die Andruckrolle 17 nicht mehr gegen das Filament 20. Eine an dem verschieblichen Rahmen 16 angeordnete Klemmbacke 18 drückt in der unteren Position des Rahmens 16 das Filament 20 gegen die feste, an einem kammartigen Träger 29 angeordnete Gegenbacke 19, so dass eine unerwünschte Bewegung des Filaments 20 verhindert wird. In einer Mittelstellung (siehe Figur 8b) liegen weder die Andruckrolle 17 noch die Klemmbacke 18 an ihrem jeweiligen Gegenpartner an, so dass das Filament 20 frei durch die Schalteinrichtung 15 und die Antriebsrolle 14 sowie Klemmbacke 18 und Gegenbacke 19 hindurch bewegt werden kann. Das Freigeben des Filaments 20 ist notwendig, wenn das aktuell zu verarbeitende Filament 20 den nachgeschalteten Extruder 3 erreicht hat und von nun an durch dessen Antrieb gefördert wird.

Das Filamentwechselsystem 1 ist in der Lage, ein im Extrusionsprozess befindliches Filament 20 unterbrechungsfrei und an einer definierten Stelle bzw. zu einem definierten Zeitpunkt gegen ein anderes Filament 20 aus einer beliebig großen Auswahl von Filamenten 20 zu tauschen. Das erfindungsgemäße Filamentwechselsystem 1 stellt einen schnellen Wechsel sicher, sodass der Extrusionsprozess mit einem neuen Filament 20 unterbrechungsfrei fortgesetzt werden kann.

Aus der Fördergeschwindigkeit des Filaments 20 und dem Abstand zwischen Filamentwechselsystem 1 und Druckkopf 21 kann die Zeit ermittelt werden, während der noch das vorherige Filament 20 zum Drucken verwendet wird. Der Filamentwechsel muss dann um diese Zeit früher erfolgen, als der gewünschte Materialwechsel an dem Druckkopf 21 erfolgen soll. Der Filamentwechsel nimmt einen gewissen (wenn auch kleinen) Zeitraum in Anspruch, so dass sich zwischen dem Anfang des neu gewählten Filaments 20 und dem Ende des während des Filamentwechsels vom Extruder 3 weitergeförderten vorherigen Filaments 20 ein Freiraum bildet. Dieser Freiraum kann dadurch kompensiert werden, dass die Antriebsrolle 14 unmittelbar nach dem Filamentwechsel schneller läuft, bis der Extruder 3 das neu zu verwendende Filament 20 erfasst hat. Ab diesem Zeitpunkt wird die Schalteinrichtung 15 zum Festklemmen, Fördern oder Freigeben des neu zu verwendenden Filaments 20 auf "Freigeben" umgeschaltet, so dass der Extruder 3 den Antrieb zwecks weiterer Förderung des neu zu verwendenden Filaments 20 übernimmt und diese Förderbewegung nicht durch die Schalteinrichtung 15 behindert wird. Durch dieses Vorgehen wird der Extrusionsvorgang nahtlos fortgesetzt und ein definierter Übergang zwischen den am Bauteil verdruckten unterschiedlichen Materialien und Farben geschaffen. Weiterhin wird jeglicher Verlust an Material in Form von Verschnitt bzw. Abfall vermieden, was neben der Kosteneinsparung auch dem Umweltschutz dient.

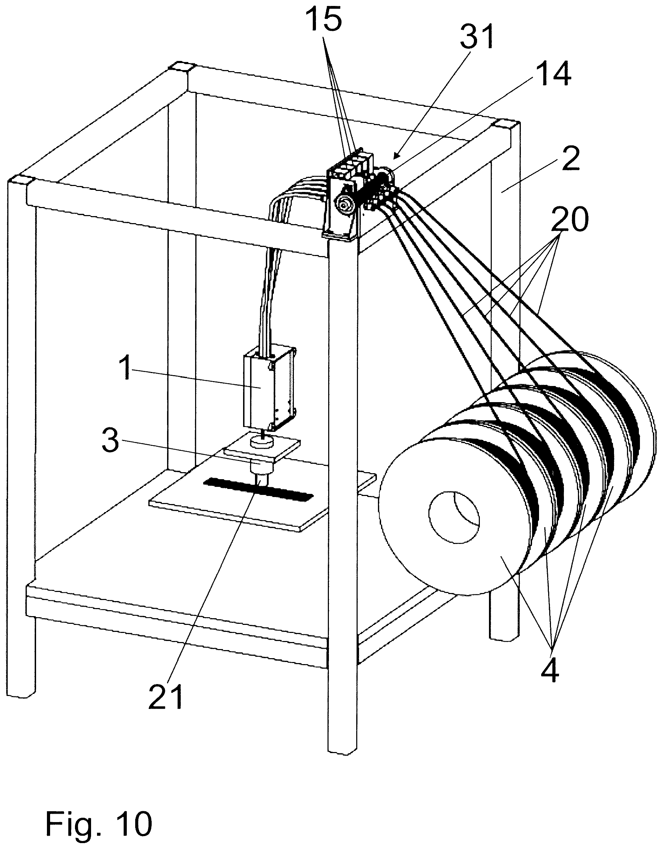

Darüber hinaus lässt sich die Auswahl des jeweils neu zu verwendenden Filaments 20 auch mithilfe eines passiven Bauelements 32 umsetzen, welches eine beliebige Anzahl von Filamenten 20 an dessen Eingang 12 auf einen einzigen Ausgang 8 zusammenführen kann und ohne Bewegung der Auswahleinrichtung 6 selbst auskommt. In der Figur 10 ist die prinzipielle Anordnung einer solchen weiteren Ausgestaltung des Filamentwechselsystems 1 mit einer kegelförmig ausgebildeten Zuordnungseinrichtung 32 an einem FLM-Drucksystem dargestellt, wobei die von den Filamentspeichern 4 abgezogenen Filamente 20 über eine Umlenkstation 31 mit wie schon vorstehend beschriebenen Schalteinrichtungen 15 bis zu dem Filamentwechselsystem 1 geführt werden, das hier nah an dem Extruder 3 und dem Druckkopf 21 angeordnet ist.

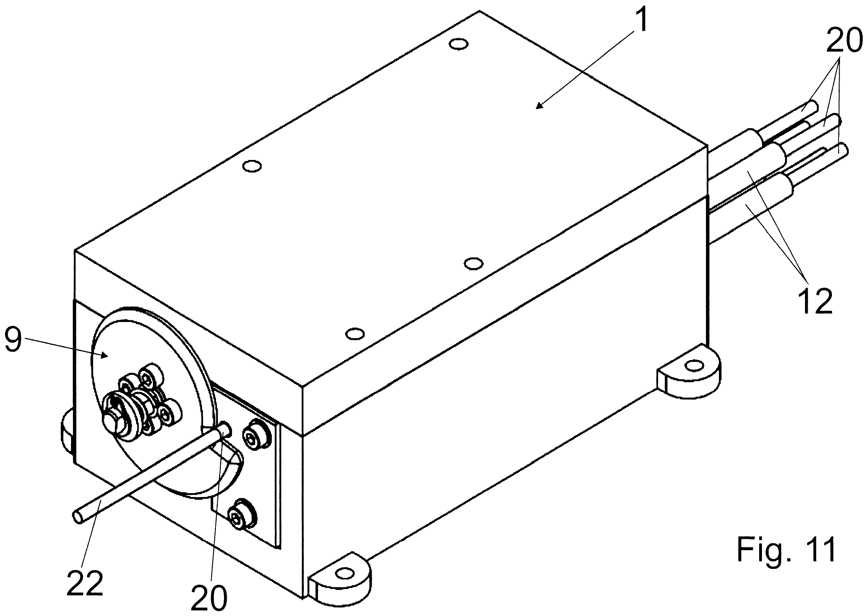

In der Figur 11 ist eine Ansicht des Gehäuses des Filamentwechselsystems 1 gemäß Figur 10 mit darin eintretenden Filamenten 20 und der einzelnen Führungsbahn 22 zum Extruder 3 zu erkennen. In Richtung auf den Extruder 3 ausgerichtet ist eine hier als drehbar gelagertes und profiliert ausgebildetes Messer ausgestaltete Trenneinheit 9 zu erkennen, die das aus dem Gehäuse des Filamentwechselsystems 1 austretende Filament 20 bei seiner Rotation scherenartig abschneiden kann, wenn ein Filamentwechsel des Filaments 20 eingeleitet werden soll.

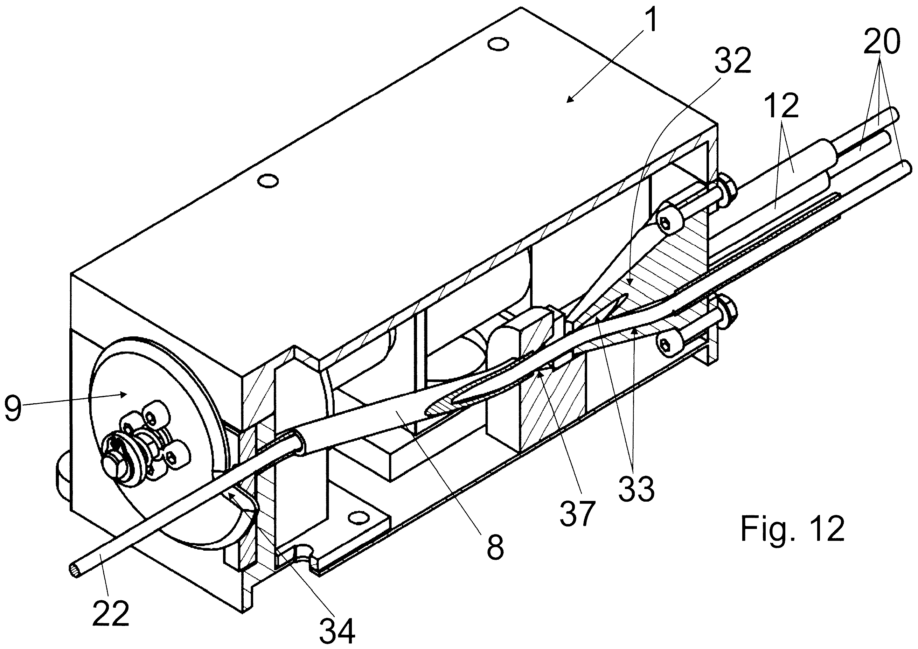

Die Funktion des Filamentwechselsystems 1 mit einem passiven, unbeweglichen Bauelement ist in der Figur 12 genauer zu erkennen, die eine teilweise aufgeschnittene räumliche Darstellung der Auswahleinrichtung 6 gemäß Figur 10 mit einem zwischen dem Filamentspeicher 4 und dem Extruder 3 durchlaufenden Filament 20 zeigt. Hierbei werden die am hinteren, eingangsseitigen Ende des Filamentwechselsystems 1 in die Einlässe 12 einlaufenden Filamente 20 durch in einem Kegelabschnitt 32 gebildete und mit konisch angeordneten Führungskanälen 33 versehenen Führungselement so in Richtung auf einen zentralen Führungskanal 37 umgelenkt, dass die Filamente 20 von dort aus in den Auslass 8 und von dort wie schon beschrieben in die schlauchförmige Führungsbahn 22 zum Extruder 3 eingefördert werden können.

Allerdings kann aufgrund der konisch angeordneten Führungskanäle 33 und der Zusammenführung auf einen zentralen Führungskanal 37 immer nur ein einziges Filament 20 komplett durch das Filamentwechselsystems 1 hindurch gefördert werden, da dieses einzige Filament 20 den zentralen Führungskanal 37 für die anderen Filamente blockiert.

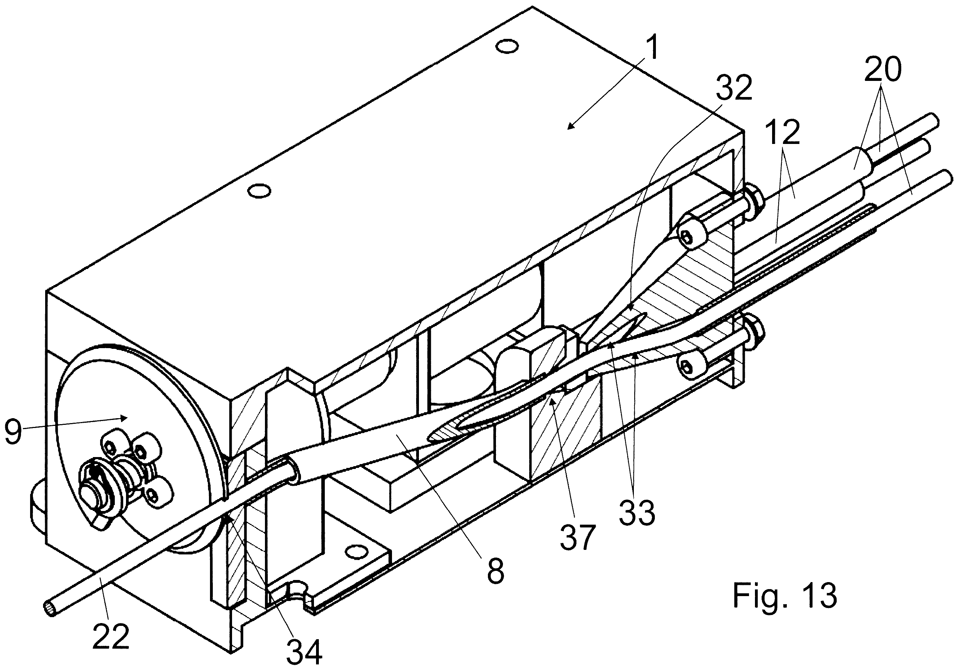

Der Wechselvorgang mit dem Filamentwechselsystem 1 erfolgt hierbei dergestalt, dass wie in Figur 12 erkennbar und in Figur 13 genauer dargestellt das bisher verwendete Filament 20 durch eine Rotation des Messers der Trennvorrichtung 9 geschnitten wird. Dieser abgetrennte Strang des bisher verwendeten Filaments 20 wird dann in schon beschriebener Weise durch den Extruder 3 weiter gefördert.

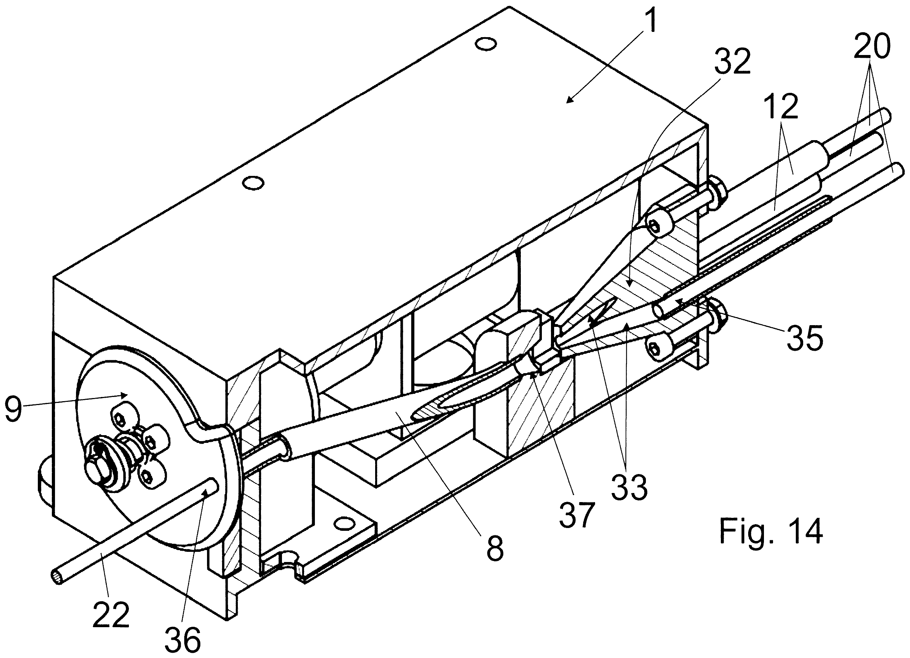

Um nun den zentralen Führungskanal 37 für ein anderes Filament 20 frei zu machen, wird das einlaufseitige Ende des bisher verwendeten Filaments 20 wie in Figur 14 zu erkennen durch eine Umsteuerung der zugehörigen Schalteinrichtung 15 und der Antriebsrolle 14 ein Stück weit entgegen der üblichen Förderrichtung der Filamente 20 zurück gezogen, etwa bis in den Bereich der noch nicht konischen Ausbildung des jeweiligen Führungskanals 33. Nun kann allein durch Ansteuerung der zu dem neu zu verwendenden Filaments 20 gehörigen Schalteinrichtung 15 und der Antriebsrolle 14 das neu zu verwendende Filament 20 in den zentralen Führungskanal 37 vorgeschoben und über den Auslass 8 zum Extruder 3 gefördert werden. Auch hierbei kann, wie schon bei der ersten Ausgestaltung des Filamentwechselsystems 1 beschrieben, das neu zu verwendende Filament 20 mit einer höheren Fördergeschwindigkeit dem vorher verwendeten Filament 20 nachgeschoben und die entstandene Lücke geschlossen werden.

Diese Ausgestaltung des Filamentwechselsystems 1 hat den Vorteil, im Bereich der Auswahleinrichtung 6 ganz ohne bewegliche Teile auszukommen und daher kostengünstig und betriebssicher funktionieren zu können. Auch kann der Wechsel der Filamente besonders schnell ablaufen, da die benötigten Bewegungen nur kurz sind.

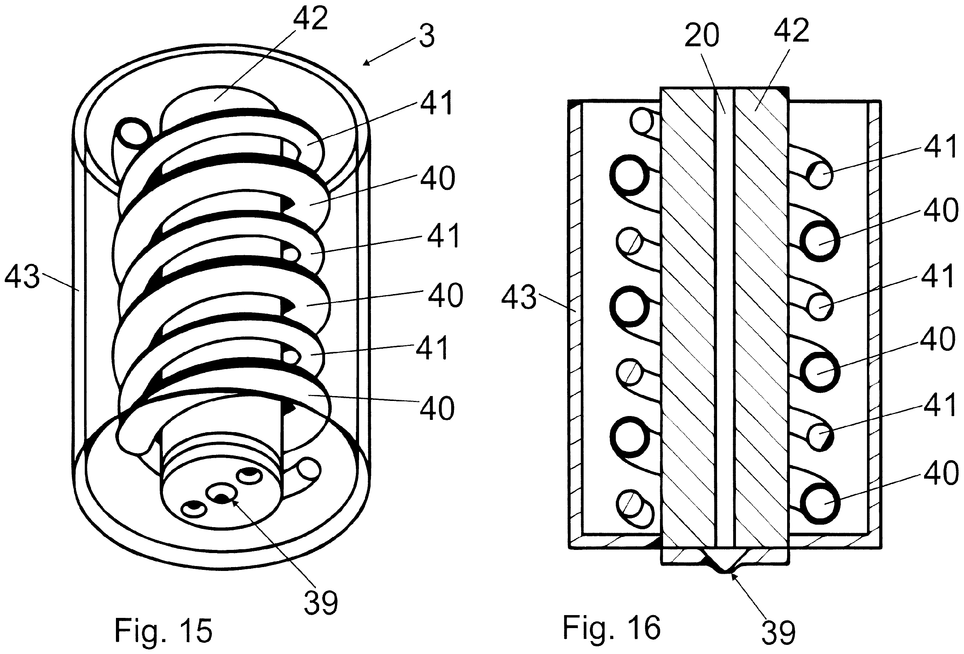

In Figur 15 ist in einem auf die wesentlichen Teile beschränkten Ausschnitt der erfindungsgemäße Extruder 3 hinsichtlich seines Aufbaus dargestellt, bei dem in einem Verkleidungsrohr 43 eine Erwärmungseinrichtung 41, eine Kühlungseinrichtung 40 und die Druckdüse 39 abgebildet sind. Figur 16 zeigt eine Schnittansicht des Extruders 3 gemäß Figur 15 . Die Energieeinbringung in das Filament 20 erfolgt mittels der spulenartig aufgebauten Erwärmungseinrichtung 41 in Form einer stromdurchflossenen, mehrgängigen Induktionsspule über die induktionsgeeignete Führung 42 für das Filament 20, die von der Induktionsspule 41 schraubenförmig umschlossen wird. Versetzt zu den Schraubengängen der Induktionsspule 41 ist die ebenfalls schraubenförmig aus einem durchgehenden Rohrelement gebildete Kühlungseinrichtung 40 angeordnet, die von einem geeigneten Kühlmittel durchströmt wird. Aufgrund der räumlichen Überschneidung der Erwärmungseinrichtung 41 und der Kühlungseinrichtung 40 können sehr kurzfristige Temperaturwechsel in dem in der Führung 42 durchlaufenden Filamentabschnitt 20 realisiert werden. Die Düse 39 sorgt für eine Ausbringung des aufgeschmolzenen Filaments 48 mit der gewünschten Genauigkeit bezüglich der Schichtdicke zu erstellenden Bauteils.

Das Filament 20 wird hierbei in der Führung 42 indirekt über die Induktionswirkung der Induktionsspule der Erwärmungseinrichtung 41 erwärmt, wobei die Temperierwirkung der Erwärmungseinrichtung 41 etwa beim Übergang auf ein niedriger schmelzendes Material eines folgenden Filaments 20 durch gezielte Zuschaltung der Kühlungseinrichtung 40 beeinflusst werden kann und dadurch sehr schnell das durchlaufende, niedriger schmelzende Material des nachfolgenden Filaments 20 auch nur noch mit der geringeren Temperatur aufgeschmolzen wird. Dies erfolgt etwa fallweise nach dem Wechseln des Filaments 20 und wird nicht durch die relativ träge Temperierung anderer Bauteile des Extruders 3 verlangsamt. Soll etwa für ein höherschmelzendes Filament 20 die Temperatur in der Führung 42 wieder erhöht werden, so muss nur die Wirkung der Erwärmungseinrichtung 41 angepasst und die Kühlungseinrichtung 40 abgeschaltet werden.

Figur 17 zeigt eine mögliche Anordnung der für einen erfindungsgemäßen Extrusionsprozess erforderlichen Komponenten eines Extruders 3 unter Verwendung eines Lasers 47. Die Fördereinheit 44 sorgt für den Einzug und die sichere Förderung von Filamenten 20 unterschiedlichsten Materials über eine Führung durch die Kühleinrichtung 45 in die Erwärmungseinrichtung 46, welche über den Anschluss eines Lasers 47 mit Energie versorgt wird. Innerhalb der Erwärmungseinrichtung 46 werden die Filamente 20 aufgeschmolzen und mithilfe der Düse 39 in Form von flüssigem Kunststoff 48 extrudiert.

Figur 18 zeigt die Erwärmungseinrichtung 46, die zugehörige Kühleinrichtung 45 sowie die Düse 39 des erfindungsgemäßen Extruders 3 unter Verwendung eines Lasers 47 in der Erwärmungseinrichtung 46. Diese sorgt für die Erwärmung des Filaments 20. Über die Einstellung der Leistung des Lasers 47 kann diese direkt beeinflusst werden. Somit kann zu jeder Zeit die aktuell benötigte Verarbeitungstemperatur des sich innerhalb der Erwärmungseinrichtung 46 befindlichen Filaments 20 bereitgestellt werden. Die Kühlungseinrichtung 45 stellt dabei eine ausreichende Wärmeabfuhr sicher, die infolge von Wärmeleitungseffekten ausgehend von den aufgeschmolzenen Filamenten 20, 48 benötigt wird. Die Kühlungseinrichtung 45 ist als aktive Kühlung ausgelegt, wobei ein Eingang 49 und ein Ausgang 49 für ein Kühlmedium vorgesehen wird. Das Kühlmedium läuft durch eine U-förmige Kontur um den oberen Teil der Erwärmungseinrichtung 46 herum, sodass gleichzeitig ein Aufschmelzen des Filamentmaterials 20 in der Führung 42 oberhalb dieser Erwärmungseinrichtung 46 verhindert wird.

Dabei werden die Filamente 20 von oben mithilfe einer Führung 42 durch die Kühlungseinrichtung 45 des Extruders 3 in ein Glasrohr geleitet, welches von einer Schmelzkammer umgeben ist. In die Schmelzkammer wird mithilfe des Lasers 47 die erforderliche Energie eingebracht. Den unteren Abschluss der Schmelzkammer bildet die Düse 39, durch welche der aufgeschmolzene Kunststoff 48 extrudiert wird. In die Kühlungseinrichtung 45 sind Kühlbohrungen 49 eingebracht, um mithilfe eines Kühlmediums die Abwärme aus dem Erwärmungsvorgang abtransportieren zu können.

Zur Veränderung des ausgebrachten Volumens am Filamenten 48 können Düsen 39 mit unterschiedlichen Düsendurchmessern verwendet werden. Auch hierbei ist es erforderlich, die Prozesstemperatur bei der Erwärmung des Filaments 20 über die eingebrachte oder entzogene Wärmemenge zu regulieren, wozu der beschriebene Extruder 3 ebenfalls sehr gut geeignet ist.

### Sachnummernliste

- 1 -: Filamentwechselsystem
- 2 -: Rahmen
- 3 -: Extruder
- 4 -: Filamentrollen
- 5 -: Schlitz
- 6 -: Auswahleinheit
- 7 -: Linearführungen
- 8 -: Auslass
- 9 -: Trenneinheit
- 10-: ziehend wirkender Pneumatikzylinder
- 11 -: zwei Scherenmesser
- 12-: Einlass
- 13-: zwei Hebel
- 14-: Antriebsrolle
- 15-: Schalteinrichtung
- 16-: senkrecht verschieblicher Rahmen/Stelleinheit
- 17-: Andruckrolle
- 18-: Klemmbacke
- 19-: feste Gegenbacke
- 20-: Filament
- 21 -: Druckkopf
- 22-: Führungsbahn zum Extruder
- 23-: Schrittmotor für Antriebsrolle
- 24 -: Getriebe für Antriebsrolle
- 25-: Schrittmotor für Linearverstellung
- 26-: Getriebe für Linearverstellung
- 27-: Solenoid
- 28-: Verstellrichtung Solenoid
- 29-: Träger
- 30-: Austrittsbohrung
- 31 -: Umlenkung Filamente
- 32-: Kegelabschnitt
- 33-: konischer Führungskanal
- 34 -: Schnittbereich
- 35-: zurückgezogener Endbereich Filament
- 36-: abgeschnittener Endbereich Filament
- 37 -: zentraler Führungskanal
- 38-: Zuordnungseinrichtung
- 39 -: Düse
- 40 -: Kühlungseinrichtung
- 41 -: Erwärmungseinrichtung/Induktionsspule
- 42 -: induktionsgeeignete Führung Filament
- 43 -: Verkleidungsrohr
- 44 -: Fördereinheit
- 45 -: Kühlungseinrichtung
- 46 -: Erwärmungseinrichtung
- 47 -: Laser
- 48 -: erwärmtes Filament
- 49 -: Kühlflüssigkeitsbohrungen

## Patentansprüche

1. Filamentwechselsystem (1) zum Wechseln von Filamenten (20) unterschiedlicher Farbe und/oder unterschiedlichen Materials für die Fertigung von 3D-Druckteilen nach dem FLM-Verfahren,
wobei das Filamentwechselsystem (1) mindestens eine Auswahleinrichtung (6) und mindestens eine Trenneinheit (9) aufweist, wobei die Auswahleinrichtung (6) und die Trenneinheit (9) zwischen einer Speichervorrichtung (4) für alle verwendeten Filamentstränge (20) und einem Extruder (3) anordnenbar sind, wobei die Auswahleinrichtung (6) eine Auswahleinrichtung (6) zur Auswahl des jeweils zu verwendenden Filaments (20) ist und die eine Trenneinheit (9) eine Trenneinheit zum Abtrennen des vorher verwendeten Filaments (20) ist,
wobei jedem der verwendbaren Filamente (20) je eine Schalteinrichtung (15) zugeordnet ist, die das zugehörige Filament (20) wahlweise in Förderposition zur Förderung durch eine Antriebseinheit (14) mit einer definierten Geschwindigkeit bringen oder so freigeben kann, wobei das Filament (20) ungehindert, vorzugsweise mittels des Extruders (3) gefördert werden kann,
wobei die Auswahleinrichtung (6) eine Zuordnungseinrichtung (38) aufweist, die für das jeweils verwendete Filament (20) einen Abschnitt der Förderstrecke von der Speichervorrichtung (4) zu dem Extruder (3) bildet, und Schaleinrichtung (15) und Antriebseinheit (14) zumindest zeitweise so einstellbar sind, dass das neu verwendete Filament (20) mit einer höheren Fördergeschwindigkeit als der Fördergeschwindigkeit des bisher verwendeten Filaments (20) dem bisher verwendeten Filament (20) hinterher gefördert wird,
**dadurch gekennzeichnet, dass**
die Zuordnungseinrichtung (38) zur Auswahl des zu verwendenden Filaments (20) eine linear verschiebliche Einheit (12, 38) aufweist, in der Endabschnitte der Filamente (20) nebeneinander magaziniert aufgenommen sind, und die verschiebliche Einheit (12, 38) mittels linearer Verstellbewegung das jeweils zu verwendende Filament (20) gegenüberliegend zu einer einzigen Führungsbahn (22) in Richtung auf den Extruder (3) positioniert.

2. Filamentwechselsystem (1) gemäß Anspruch 1, **dadurch gekennzeichnet, dass** Schalteinrichtung (15) und Antriebseinheit (14) zumindest solange mit der höheren Fördergeschwindigkeit betreibbar sind, bis das neu verwendete Filament (20) das bisher verwendete Filament (20) eingeholt hat, insbesondere Schalteinrichtung (15) und Antriebseinheit (14) solange mit der höheren Fördergeschwindigkeit betreibbar sind, bis auch das neu verwendete Filament (20) von dem Extruder (3) gefördert wird, wobei vorzugsweise die Schalteinrichtung (15) ab dem Zeitpunkt, an dem das neu verwendete Filament (20) auch von dem Extruder (3) gefördert wird, dieses Filament (20) freigibt.

3. Filamentwechselsystem (1) gemäß einem der vorstehenden Ansprüche, **dadurch gekennzeichnet, dass** die jedem Filament (20) jeweils zugeordnete Schalteinrichtung (15) jeweils eine eigene Antriebseinheit (14), vorzugsweise eine Antriebsrolle (14) oder dgl., aufweist, mit der jedes Filament (20) mit einer anpassbaren Geschwindigkeit hin zu dem Extruder (3) förderbar ist, oder die jedem Filament (20) jeweils zugeordneten Schalteinrichtungen (15) eine gemeinsame Antriebseinheit (14), vorzugsweise eine Antriebsrolle (14) oder dgl., für alle förderbaren Filamente (20) aufweisen, mit der jedes Filament (20) mit einer anpassbaren Geschwindigkeit hin zu dem Extruder (3) förderbar ist.

4. Filamentwechselsystem (1) gemäß einem der vorstehenden Ansprüche, **dadurch gekennzeichnet, dass** jede Schalteinrichtung (15) jeweils eine linear verschiebliche oder um eine Achse verschwenkbare Stelleinheit (16) aufweist, die so verstellbar ist, dass das jeweilige Filament (20) entweder gegen die Antriebsrolle (14) angedrückt oder freigegeben ist, wobei jede Stelleinheit (16) vorzugsweise einen, vorzugsweise linear zwischen festlegbaren Positionen verschiebbaren, Rahmen (16) mit einer Andruckrolle (17) und einer Klemmbacke (18) aufweist.

5. Filamentwechselsystem (1) gemäß Anspruch 4, **dadurch gekennzeichnet, dass** die verschiebbare oder verschwenkbare Andruckrolle (17) das jeweils zu fördernde Filament (20) in einer Förderstellung der Schalteinrichtung (15) gegen die angetriebene Antriebsrolle (17) drückt, sodass das jeweilige Filament (20) reibschlüssig zum Extruder (3) gefördert wird, und die Schalteinrichtung (15), vorzugsweise die Andruckrolle (17) und die Klemmbacke (18), für das jeweils zu fördernde Filament (20) in einer Durchlaufstellung der Schalteinrichtung (15) so positioniert ist, dass das jeweils zu fördernde Filament (20) bei Einwirkung einer äußeren Kraft, insbesondere einer durch den nachgeschalteten Extruder (3) erzeugten Zugkraft, ungehindert und weitgehend reibungsfrei durch die Schalteinrichtung (15) hindurch laufen kann.

6. Filamentwechselsystem (1) gemäß einem der vorstehenden Ansprüche, **dadurch gekennzeichnet, dass** jede Schalteinrichtung (15) in eine weitere Position verstellbar ist, in der die Schalteinrichtung (15) das jeweilige Filament (20), vorzugsweise mit der Klemmbacke (18) gegen eine feste Gegenbacke (19), klemmt.

7. Filamentwechselsystem (1) gemäß einem der vorstehenden Ansprüche, **dadurch gekennzeichnet, dass** die Auswahleinrichtung (6) ein linear bewegliches, angetriebenes Magazin aufweist, das eine Anzahl von Führungselementen (12) entsprechend der maximalen Anzahl der zu verarbeitenden Filamente (20) aufweist.

8. Filamentwechselsystem (1) gemäß einem der vorstehenden Ansprüche, **dadurch gekennzeichnet, dass** das Trennen des aktuell verarbeiteten Filaments (20) durch Scherschneiden mittels zweier Schneiden (11) ausführbar ist, die vorzugsweise über einen ziehenden pneumatischen Kurzhubzylinder (10) sowie eine Hebelkonstruktion (13) aufeinander zu bewegbar sind, oder das Trennen des aktuell verarbeiteten Filaments (20) durch Scherschneiden mittels einer einzigen bewegten Schneide ausführbar ist, die vorzugsweise über einen Schrittmotor und eine Exzenterscheibe betätigbar ist.

9. Verfahren zum Wechseln von Filamenten (20) unterschiedlicher Farbe und/oder unterschiedlichen Materials für die Fertigung von 3D-Druckteilen nach dem FLM-Verfahren,
wobei zwischen einer Speichervorrichtung (4) für alle verwendeten Filamentstränge (20) und einem Extruder (3) mindestens eine Auswahleinrichtung (6) zur Auswahl des jeweils zu verwendenden Filaments (20) und mindestens eine Trenneinheit (9) zum Abtrennen des vorher verwendeten Filaments (20) angeordnet werden,
wobei die Auswahleinrichtung (6) eine Zuordnungseinrichtung (38) aufweist, die für das jeweils verwendete Filament (20) einen Abschnitt der Förderstrecke von der Speichervorrichtung (4) zu dem Extruder (3) bildet, beim Wechsel auf ein anderes Filament (20) mittels der Trenneinheit (9) das vorher verwendete Filament (20) abgetrennt und das extruderseitig abgetrennte Stück dieses Filaments (20) kontinuierlich weiter zu dem Extruder (3) hin gefördert wird,
in der Zuordnungseinrichtung (38) das neu zu verwendende Filament (20) passend zu der Förderstrecke zu dem Extruder (3) positioniert wird, wobei die durch die benötigte Zeit zur Positionierung des neu zu verwendenden Filaments (20) entstandene Lücke zwischen weiter zu dem Extruder (3) gefördertem Endbereich des vorher verwendeten Filaments (20) und dem neu zu verwendenden Filament (20) dadurch geschlossen wird, dass das neu zu verwendende Filament (20) solange mit einer höheren Fördergeschwindigkeit als derjenigen des von dem Extruder (3) geförderten vorherigen Filaments (20) zu dem Extruder (3) gefördert wird, bis das neu zu verwendende Filament (20) den Endbereich des vorher verwendeten Filaments (20) eingeholt hat, und anschließend beide Filamente (20) nahtlos aufeinanderfolgend mit gleicher Fördergeschwindigkeit solange vorgeschoben werden, bis auch das neu zu verwendende Filament (20) den Extruder (3) erreicht hat und durch den Extruder (3) weiter gefördert wird,
**dadurch gekennzeichnet, dass**
die Positionierung des neu zu verwendenden Filaments (20) durch eine lineare Verschiebebewegung der Zuordnungseinrichtung (38) vorgenommen wird, die das neu zu verwendende Filament (20) passend gegenüberliegend zu einer einzigen Führungsbahn (22) in Richtung auf den Extruder (3) positioniert.

10. Verfahren gemäß Anspruch 9, **dadurch gekennzeichnet, dass** das vorratsseitig abgetrennte Stück des vorher verwendeten Filaments (20) durch eine Schalteinrichtung (15) ein Stück weit entgegen der Förderrichtung der Filamente (20) zurückgezogen wird.

11. Verfahren gemäß Anspruch 9 oder 10, **dadurch gekennzeichnet, dass** eine Schalteinrichtung (15) und eine Antriebseinheit (14) der Auswahleinrichtung (6) das neu zu verwendende Filament (20) solange dem vorher verwendeten Filament (20) nachfördern, bis auch das neu zu verwendende Filament (20) vom Extruder (3) erfasst und anschließend durch diesen weitergefördert wird, wobei die Schalteinrichtung (15) bei Erreichen des Extruders (3) durch das neu zu verwendende Filament (20) derart umgeschaltet wird, dass das neu zu verwendende Filament (20) die Schalteinrichtung (15) weitgehend kraftfrei durchlaufen kann.

12. Verfahren gemäß einem der Ansprüche 9 bis 11, **dadurch gekennzeichnet, dass** die maximale Wechselzeit für den Filamentwechsel aus der Fördergeschwindigkeit des vorher verwendeten Filaments (20) durch den Extruder (3) so und dem Abstand zwischen Filamentwechselsystem (1) und Extruder (3) ermittelt wird, insbesondere der Filamentwechsel so viel früher ausgelöst wird, dass beim Einlaufen des neu zu verwendenden Filaments (20) in den Extruder (3) der Druckvorgang das Material des neu zu verwendenden Filaments (20) erforderlich macht.

13. 3D-Drucker mit einem Filamentwechselsystem nach einem der Ansprüche 1 bis 8 und einem Extruder.

14. 3D-Drucker nach Anspruch 13, **dadurch gekennzeichnet, dass** der Extruder einen eigenen Antrieb aufweist.

15. 3D-Drucker nach Anspruch 13 oder 14, **dadurch gekennzeichnet, dass** im Bereich des Extruders (3), vorzugsweise im Bereich unmittelbar vor der Austrittsdüse (39) des Extruders (3), Erwärmungseinrichtungen (41) und/oder Kühlungseinrichtungen (40) angeordnet sind, mit denen das Material aufeinander folgender Filamentabschnitte (20) aus Filamentmaterialien unterschiedlicher Eigenschaften, vorzugsweise unterschiedlicher Schmelzeigenschaften, jeweils passend temperierbar ist.

16. 3D-Drucker gemäß Anspruch 15, **dadurch gekennzeichnet, dass** die Erwärmungseinrichtungen (41) und/oder Kühlungseinrichtungen (40) im Bereich des Extruders (3) im Wesentlichen auf den gleichen Abschnitt des Filamentstrangs (20) aufeinander folgender Filamentabschnitte aus Filamentmaterialien unterschiedlicher Eigenschaften einwirkt.

17. 3D-Drucker gemäß einem der Ansprüche 15 oder 16, **dadurch gekennzeichnet, dass** die Erwärmungseinrichtung (41) mindestens eine Induktionsspule aufweist, die eine induktionsgeeignete Führung (42) für den Filamentstrang (20) im Bereich des Extruders (3) zumindest abschnittsweise umgibt.

18. 3D-Drucker gemäß einem der Ansprüche 15 oder 16, **dadurch gekennzeichnet, dass** die Kühlungseinrichtung (40) ein fluidleitendes rohrartiges Bauelement oder ein wärmeleitendes Leitelement oder ein elektrisch betreibbares kühlendes Element, vorzugsweise ein Peltierelement oder dgl. aufweist, dass die Führung (42) für den Filamentstrang (20) im Bereich des Extruders (3) zumindest abschnittsweise umgibt oder an der Führung (42) anliegt.

19. 3D-Drucker gemäß einem der Ansprüche 15 bis 18, **dadurch gekennzeichnet, dass** die Erwärmungseinrichtungen (41) und/oder Kühlungseinrichtungen (40) so ineinander gewunden die Führung (42) für den Filamentstrang (20) umgeben, dass sie im Wesentlichen auf den gleichen Abschnitt des Filamentstrangs (20) einwirken.

20. 3D-Drucker gemäß Anspruch 15, **dadurch gekennzeichnet, dass** die Erwärmungseinrichtung (46) einen Laser (47) aufweist, der durch eine für die Laserstrahlung optisch neutrale Umhüllung für den Filamentstrang (20) auf den Filamentstrang (20) einwirkt und diesen Filamentstrang (20) direkt erhitzt.

21. 3D-Drucker gemäß Anspruch 20, **dadurch gekennzeichnet, dass** die optisch neutrale Umhüllung für den Filamentstrang (20) von einem für den Wellenlängenbereich der Laserstrahlung stark reflektierenden Material umgeben ist, das den Laserstrahl (47) durch vielfache Reflektion immer wieder durch den Filamentstrang (20) reflektiert und die Erwärmung des Filamentstrangs (20) verbessert.

## Claims

1. Filament changing system (1) for changing filaments (20) of different colour and/or of different material for manufacture of 3D printing parts according to the FLM method, the filament changing system (1) having at least one selecting device (6) and at least one separating unit (9), the selecting device (6) and the separating unit (9) being arrangeable between a storage device (4) for all filament ropes (20) used and an extruder (3), the selecting device (6) being a selecting device (6) for selecting the filament (20) to be used respectively and the separating unit (9) being a separating unit for detaching the filament (20) used previously, one switching device (15) respectively being assigned to each of the usable filaments (20) that may either bring the related filament (20) into conveying position for conveying by a driving unit (14) with a defined velocity or release it, the filament (20) may be conveyed in an unhindered manner, preferably by means of the extruder (3), the selecting device (6) having an assigning device (38) forming a section of the conveying line from the storage device (4) to the extruder (3) for the filament (20) used respectively, and switching device (15) and driving unit (14) being adjustable at least temporarily such that the filament (20) used newly is conveyed behind the filament (20) used previously at a higher conveying velocity than the conveying velocity of the filament (20) used previously, **characterised in that**
the assigning device (38) has a linearly displaceable unit (12, 38) for selecting the filament (20) to be used in which end segments of the filaments (20) are held side by side in a magazine-like manner, and the displaceable unit (12, 38) positions the filament (20) to be used respectively by means of linear adjustment movement opposing a single guideway (22) in the direction of the extruder (3).

2. Filament changing system (1) according to claim 1, **characterised in that** switching device (15) and driving unit (14) are operable at the higher conveying velocity at least until the filament (20) used newly catches up with the filament (20) used previously, in particular switching device (15) and driving unit (14) are operable at the higher conveying velocity until the filament (20) used newly is conveyed by the extruder (3) also, the switching device (15) preferably releasing said filament (20) from the time when the filament (20) used newly being conveyed by the extruder (3) also.

3. Filament changing system (1) according to any one of the preceding claims, **characterised in that** the switching device (15) respectively assigned to each filament (20) has an own driving unit (14) respectively, preferably a driving roller (14) or the like, by which each filament (20) is conveyable towards the extruder (3) at an adaptable velocity, or the switching devices (15) respectively assigned to each filament (20) have a common driving unit (14), preferably a driving roller (14) or the like, for all conveyable filaments (20), by which each filament (20) is conveyable towards the extruder (3) at an adaptable velocity.

4. Filament changing system (1) according to any one of the preceding claims, **characterised in that** each switching device (15) has respectively one adjustment unit (16) being linearly displaceable or pivotable about an axis that is adjustable such that the respective filament (20) is either pressed against the driving roller (14) or released, each adjustment unit (16) preferably having a frame (16), preferably being linearly displaceable between fixable positions, having a pressing roller (17) and a clamping jaw (18).

5. Filament changing system (1) according to claim 4, **characterised in that** the displaceable and pivotable pressing roller (17) presses the filament (20) to be conveyed respectively against the driven driving roller (17) in a conveying position of the switching device (15) so that the respective filament (20) is conveyed to the extruder (3) in a frictionally engaged manner, and the switching device (15), preferably the pressing roller (17) and the clamping jaw (18), is positioned in a passing position of the switching device (15) for the filament (20) to be conveyed respectively such that the filament (20) to be conveyed respectively may pass throughout the switching device (15) in an unhindered and almost frictionless manner when an external force being applied, in particular a traction generated by the downstream extruder (3).

6. Filament switching system (1) according to any one of the preceding claims, **characterised in that** each switching device (15) is adjustable into a further position, in which the switching device (15) clamps the respective filament (20), preferably with the clamping jaw (18) against a stationary counter jaw (19).

7. Filament changing system (1) according to any one of the preceding claims, **characterised in that** the selecting device (6) has a linearly movable driven magazine having a number of guiding elements (12) according to the maximum number of filaments (20) to be handled.

8. Filament changing system (1) according to any one of the preceding claims, **characterised in that** separating the filament (20) handled currently is realizable by shear cutting by means of two cutting edges (11) that are preferably movable towards each other via a pulling pneumatic short-stroke cylinder (10) as well as a lever construction (13), or separating the filament (20) handled currently is realizable by shear cutting by means of a single moved cutting edge that is preferably operable via a stepper motor or an eccentric disc.

9. Method for changing filaments (20) of different colour and/or of different material for manufacture of 3D printing parts according to the FLM method,
at least one selecting device (6) for selecting the filament (20) to be used respectively and at least one separating unit (9) for detaching the filament (20) used previously being arranged between a storage device (4) for all filament ropes (20) used and an extruder (3), the selecting device (6) having an assigning device (38) forming a section of the conveying line from the storage device (4) to the extruder (3) for the filament (20) used respectively, the filament (20) used previously being detached by means of the separating unit (9) when changing to another filament (20) and the part of said filament (20) detached on the extruder side being further conveyed continuously towards the extruder (3), the filament (20) to be used newly being positioned in the assigning device (38) in a correspondent manner to the conveying line to the extruder (3), the gap between the end region further conveyed to the extruder (3) of the filament (20) used previously and the filament (20) to be used newly, caused by the time needed for positioning the filament (20) to be used newly, being closed by the filament (20) to be used newly being conveyed to the extruder (3) at a higher conveying velocity than those of the previous filament (20) conveyed by the extruder (3) until the filament (20) to be used newly catches up with the end region of the filament (20) used previously, and subsequently the two filaments (20) being pushed forward in a seamlessly sequential manner at the same conveying velocity until the filament (20) to be used newly reaches the extruder (3) also and being further conveyed by the extruder (3), **characterised in that** positioning the filament (20) to be used newly is carried out by a linear displacement movement of the assigning device (38) that positions the filament (20) to be used newly in the direction of the extruder (3) opposing a single guideway (22) in a correspondent manner.

10. Method according to claim 9, **characterised in that** the part, detached on the storage side, of the filament (20) used previously is pulled back to a certain extend by a switching device (15) contrary to the conveying direction of the filaments (20).

11. Method according to claim 9 or 10, **characterised in that** a switching device (15) and a driving unit (14) of the selecting device (6) convey the filament (20) to be used newly behind the filament (20) used previously until the filament (20) to be used newly is caught by the extruder (3) also and is further conveyed by it subsequently, the switching device (15) being switched such that the filament (20) to be used newly may pass throughout the switching device (15) in an almost forceless manner when the filament (20) to be used newly reaching the extruder (3).

12. Method according to any one of the claims 9 to 11, **characterised in that** the maximum changing time for the filament changing is determined from the conveying velocity of the filament (20) used previously throughout the extruder (3) and the distance between filament changing system (1) and extruder (3), in particular the filament change is initiated that much earlier that the printing process requires the material of the filament (20) to be used newly when the filament (20) to be used newly running into the extruder (3).

13. 3D printer having a filament changing system according to any one of the claims 1 to 8 and an extruder.

14. 3D printer according to claim 13, **characterised in that** the extruder has an own drive.

15. 3D printer according to claim 13 or 14, **characterised in that** heating devices (41) and/or cooling devices (40) are arranged in the region of the extruder (3), preferably in the region directly in front of the outlet nozzle (39) of the extruder (3), by which the material of sequential filament segments (20) made of filament materials of different properties, preferably of different melting properties, is temperable in an appropriate manner respectively.

16. 3D printer according to claim 15, **characterised in that** the
heating devices (41) and/or cooling devices (40) in the region of the extruder (3) substantially act on the same segment of the filament rope (20) of sequential filament segments made of filament materials of different properties.

17. 3D printer according to any one of the claims 15 or 16, **characterised in that** the heating device (41) has at least one induction coil that surrounds an induction-compatible guide (42) for the filament rope (20) in the region of the extruder (3) at least in sections.

18. 3D printer according to any one of the claims 15 or 16, **characterised in that** the cooling device (40) has a fluid conducting tube-like component or a heat conducting conductive element or an electrically drivable cooling element, preferably a Peltier element or the like, that surrounds the guide (42) for the filament rope (20) in the region of the extruder (3) at least in sections or lies against the guide (42).

19. 3D printer according to any one of the claims 15 to 18, **characterised in that** the heating devices (41) and/or cooling devices (40) surround the guide (42) for the filament rope (20) in an intertwined manner such that they substantially act on the same segment of the filament rope (20).

20. 3D printer according to claim 15, **characterised in that** the
heating device (46) has a laser (47) that acts on the filament rope (20) through a sheath for the filament rope (20) being optically neutral for laser radiation and directly heats said filament rope (20).

21. 3D printer according to claim 20, **characterised in that** the optically neutral sheath for the filament rope (20) is surrounded by a material being strongly reflective in the wavelength range of laser radiation that reflects the laser beam (47) by multiple reflection through the filament rope (20) again and again and improves heating of the filament rope (20).

## Revendications

1. Système de changement de filaments (1) pour changer des filaments (20) de la couleur différente et/ou du matériau différent pour la fabrication des parties d'impression 3D selon le procédé FLM,
le système de changement de filaments (1) ayant au moins un dispositif de sélection (6) et au moins une unité de séparation (9), le dispositif de sélection (6) et l'unité de séparation (9) étant arrangéable entre un dispositif de stockage (4) pour toutes les cordes de filaments (20) utilisées et une extrudeuse (3), le dispositif de sélection (6) étant un dispositif de sélection (6) pour sélecter le filament (20) à être utilisé respectivement et l'unité de séparation étant une unité de séparation pour détacher le filament (20) utilisé précédemment, un dispositif de commutation (15) respectivement étant assigné à chacune des filaments (20) utilisables qui peut soit mettre le filament (20) relié en position de transport pour le transport par une unité d'entraînement (14) avec une vélocité définie soit le relâcher, le filament (20) peut être transporté sans encombre, de préférence au moyen de l'extrudeuse (3), le dispositif de sélection (6) ayant un dispositif d'assignation (38) formant une section de la ligne de transport du dispositif de stockage (4) à l'extrudeuse (3) pour le filament (20) utilisé respectivement, et le dispositif de commutation (15) et l'unité d'entraînement (14) étant ajustable au moins temporairement tellement que le filament (20) utilisée nouvellement est transporté à l'arrière du filament (20) utilisé précédemment à une vélocité de transport plus élevée que la vélocité de transport du filament (20) utilisée précédemment, **caractérisé en ce que**
le dispositif d'assignation (38) a une unité (12, 38) déplaçable linéairement pour sélectionner le filament (20) à être utilisé dans laquelle des segments terminales des filaments (20) sont tenus côte à côte à manière de type magasin, et l'unité (12, 38) déplaçable positionne le filament (20) à être utilisé respectivement au moyen d'un mouvement d'ajustement opposant une seule glissière de guidage (22) en direction de l'extrudeuse (3).

2. Système de changement de filaments (1) selon la revendication 1, **caractérisé en ce que** le dispositif de commutation (15) et l'unité d'entraînement (14) sont opérable à la vélocité de transport plus élevée au moins jusqu'à le filament (20) utilisé nouvellement rattrape le filament (20) utilisé précédemment, en particulière le dispositif de commutation (15) et l'unité d'entraînement (14) sont opérable à la vélocité de transport plus élevée jusqu'à le filament (20) utilisé nouvellement est transporté par l'extrudeuse (3) aussi, le dispositif de commutation (15) de préférence relâchant ledit filament (20) à partir le moment quand le filament (20) utilisé nouvellement étant transporté par l'extrudeuse aussi.

3. Système de changement de filaments (1) selon l'une des revendications précédentes, **caractérisé en ce que** le dispositif de commutation (15) respectivement assigné à chaque filament (20) a une unité d'entraînement (14) propre respectivement, de préférence un rouleau d'entraînement (14) ou d'autres choses semblables, par laquelle chaque filament (20) est transportable vers l'extrudeuse (3) à une vélocité adaptable, ou les dispositifs de commutation (15) respectivement assignés à chaque filament (20) ont une unité d'entraînement (14) commune, de préférence un rouleau d'entraînement (14) ou d'autre choses semblables, pour tout les filaments (20) transportable, par laquelle chaque filament (20) est transportable vers l'extrudeuse à une vélocité adaptable.

4. Système de changement de filaments (1) selon l'une des revendications précédentes, **caractérisé en ce que** chaque dispositif de commutation (15) a respectivement une unité d'ajustement (16) étant déplacable linéairement ou pivotant autour d'un axe qui est ajustable tellement que le filament (20) respectif est soit pressé contre le rouleau d'entraînement (14) ou relâché, chaque unité d'ajustement (16) de préférence ayant un cadre (16), de préférence étant déplacable linéairement entre des positions fixées, ayant un rouleau de pression (17) et un mâchoire de serrage (18).

5. Système de changement de filaments (1) selon la revendication 4, **caractérisé en ce que** le rouleau de pression (17) déplaçable et pivotant presse le filament (20) à être transporté respectivement contre le rouleau d'entraînement (17) entraîné dans un position de transport du dispositif de commutation (15) de sorte que le filament (20) respectif est transporté à l'extrudeuse (3) à manière frictionnellement enclenché, et le dispositif de commutation (15), de préférence le rouleau de pression (17) et le mâchoire de serrage (18), est positionné dans une position de passage du dispositif de commutation (15) pour le filament (20) à être transporté respectivement tellement que le filament (20) à être transporté respectivement peut passer au travers du dispositif de commutation (15) sans encombre et presque sans friction quand une force externe étant appliquée, en particulière une force de traction générée par l'extrudeuse (3) en aval.

6. Système de changement de filaments (1) selon l'une des revendications précédentes, **caractérisé en ce que** chaque dispositif de commutation (15) est ajustable dans une autre position, dans laquelle le dispositif de commutation (15) serre le filament (20) respectif, de préférence avec la mâchoire de serrage (18) contre une contre-mâchoire stationnaire (19).

7. Système de changement de filaments (1) selon l'une des revendications précédentes, **caractérisé en ce que** le dispositif de sélection (6) a un magasin entraîné linéairement mobile ayant un nombre des éléments de guidage (12) selon le nombre maximal des filaments (20) à être traités.

8. Système de changement de filaments (1) selon l'une des revendications précédentes, **caractérisé en ce que** séparer le filament (20) traité actuellement est réalisé par couper par cisaillement au moyen de deux bords coupant (11) qui sont de préférence mobile l'un vers l'autre via un cylindre à course courte (10) tirant pneumatique ainsi que un construction de levier (13), ou séparer le filament (20) traité actuellement est réalisé par couper par cisaillement au moyen d'un seule bord coupant mobile qui est de préférence est opérable via un moteur pas-à-pas ou un disque excentrique.

9. Procédé pour changer des filaments (20) de la couleur différente et/ou du matériau différent pour la fabrication des parties d'impression 3D selon le procédé FLM,
au moins un dispositif de sélection (6) pour sélecter le filament (20) à être utilisé respectivement et au moins une unité de séparation (9) pour détacher le filament (20) utilisé précédemment étant arrangés entre un dispositif de stockage (4) pour toutes les cordes de filaments (20) utilisées et une extrudeuse (3), le dispositif de sélection (6) ayant un dispositif d'assignation (38) formant une section de la ligne de transport du dispositif de stockage (4) à l'extrudeuse (3) pour le filament (20) utilisé respectivement, le filament (20) utilisé précédemment étant détaché au moyen de l'unité de séparation (9) quand changer à un autre filament (20) et la partie dudit filament (20) détaché sur la côte d'extrudeuse étant transporté plus loin continûment vers l'extrudeuse (3), le filament (20) à être utilisé nouvellement étant positionné dans le dispositif d'assignation (38) à manière correspondante à la ligne de transport à l'extrudeuse (3), l'espace entre la région terminale transportée plus loin à l'extrudeuse (3) du filament (20) utilisé précédemment et le filament (20) à être utilisé nouvellement, causé par le temps requis pour positionner le filament (20) à être utilisé nouvellement, étant fermé par le filament (20) à être utilisé nouvellement étant transporté à l'extrudeuse (3) à une vélocité plus élevée que celle du filament (20) précédent transporté par l'extrudeuse (3) jusqu'à le filament (20) à être utilisé nouvellement rattrape la région terminale du filament (20) utilisé précédemment, et subséquemment les deux filaments (20) étant poussés en avant à manière séquentielle sans couture à la même vélocité jusqu'à le filament (20) à être utilisé nouvellement atteint l'extrudeuse (3) aussi et étant transporté plus loin par l'extrudeuse (3),
**caractérisé en ce que** positionner le filament (20) à être utilisé nouvellement est effectué par un mouvement linéairement déplaçable du dispositif d'assignation (38) qui positionne le filament (20) à être utilisé nouvellement en direction de l'extrudeuse (3) opposant une seule glissière de guidage (22) à manière correspondante.

10. Procédé selon la revendication 9, **caractérisé en ce que** la partie, détaché sur la côte de stockage, du filament (20) utilisé précédemment est tirée de retour dans une certaine mesure par un dispositif de commutation (15) au contrairement à la direction de transport des filaments (20).

11. Procédé selon la revendication 9 ou 10, **caractérisé en ce qu'**un dispositif de commutation (15) et une unité d'entraînement (14) du dispositif de sélection (6) transportent le filament (20) à être utilisé nouvellement à l'arrière du filament (20) utilisé précédemment jusqu'à le filament (20) à être utilisé nouvellement est rattrapé par l'extrudeuse (3) aussi et est transporté plus loin par elle subséquemment, le dispositif de commutation (15) étant commuté tellement que le filament (20) à être utilisé nouvellement peut passer au travers du dispositif de commutation (15) presque sans force quand le filament (20) à être utilisé nouvellement atteignant l'extrudeuse (3).

12. Procédé selon l'une des revendications 9 à 11, **caractérisé en ce que** le temps de changement maximal pour le changement de filaments est déterminé de la vélocité de transport du filament (20) utilisé précédemment au travers de l'extrudeuse (3) et la distance entre le système de changement de filaments (1) et l'extrudeuse (3), en particulière le changement de filaments est initié autant plus tôt que le processus d'impression nécessite le matériau du filament (20) à être utilisé nouvellement quand le filament (20) à être utilisé nouvellement entre l'extrudeur (3).

13. Imprimante 3D ayant un système de changement de filaments selon l'une des revendications 1 à 8 et une extrudeuse.

14. Imprimante 3D selon la revendication 13, **caractérisée en ce que** l'extrudeuse a un entraînement propre.

15. Imprimante 3D selon la revendication 13 ou 14, **caractérisée en ce que** des dispositifs de chauffage (41) et/ou des dispositifs de refroidissement (40) sont arrangés dans la région de l'extrudeuse (3), de préférence dans la région directement devant la buse de sortie (39) de l'extrudeuse (3), par lesquels le matériau des segments de filaments (20) séquentiels faites des matériaux de filaments des propriétés différentes, de préférence des propriétés de fusion différentes, est tempérable de manière approprié respectivement.

16. Imprimante 3D selon la revendication 15, **caractérisée en ce que** les dispositifs de chauffage (41) et/ou dispositifs de refroidissement (40) dans la région de l'extrudeuse (3) agissent substantiellement sur le même segment de la corde de filament (20) des segments de filaments séquentiels faites des matériaux de filaments des propriétés différents.

17. Imprimante 3D selon l'une des revendications 15 ou 16, **caractérisée en ce que** le dispositive de chauffage (41) a au moins une bobine d'induction qui entoure un guide (42) compatible à l'induction pour la corde de filament (20) dans la région de l'extrudeuse (3) au moins par sections.

18. Imprimante 3D selon l'une des revendications 15 ou 16, **caractérisée en ce que** le dispotif de refroidissement (40) a un composant de type tubulaire conduisant du fluide ou un élément conducteur conduisant la chaleur ou un élément de refroidissement entraînable électriquement, de préférence un élément de Peltier ou d'autre choses semblables, qui entoure la guide (42) pour la corde de filament (20) dans la région de l'extrudeuse (3) au moins par sections ou se trouve contre la guide (42).

19. Imprimante 3D selon l'une des revendications 15 à 18, **caractérisée en ce que** les dispositifs de chauffage (41) et/ou dispositifs de refroidissement (40) entourent la guide (42) pour la corde de filament (20) de manière s'entrelacée tellement qu'ils agissent substantiellement sur le même segment de la corde filament (20).

20. Imprimante 3D selon la revendication 15, **caractérisée en ce que** le dispositif de chauffage (46) a un laser (47) qui agit sur la corde de filament (20) à travers d'une gaine pour la corde de filament (20) étant optiquement neutre pour le rayonnement laser et chauffe directement ladite corde de filament (20).

21. Imprimante 3D selon la revendication 20, **caractérisée en ce que** la gaine optiquement neutre pour la corde de filament (20) est entourée par un matériau étant fortement réfléchissant dans la plage de longueurs d'ondes du rayonnement laser qui réfléchit le faisceau laser (47) par la réflexion multiple au travers de la corde de filament (20) encore et encore et améliore le chauffage de la corde de filament (20).
